# EUROPEAN PATENT APPLICATION

(11) **EP 4 582 838 A1**
(43) Date of publication of application: **09.07.2025**
(21) Application number: 23860523.2
(22) Date of filing: 31.08.2023
(51) Int. Cl.: G01T 1/17, G01T 1/18, G01T 1/20, G01T 1/24, G01T 3/00

(54) **DETECTION APPARATUS, RADIATION IDENTIFICATION APPARATUS, AND NEUTRON IMAGING APPARATUS**

(30) Priority: 31.08.2022 JP 2022138726
(71) Applicant: Dai Nippon Printing Co., Ltd., Tokyo 162-8001 (JP)
(72) Inventor: MOTOMURA Tomohisa, Tokyo 162-8001 (JP); OTA Kohei, Tokyo 162-8001 (JP); TANIMORI Toru, Kyoto-shi, Kyoto 606-8501 (JP); TAKADA Atsushi, Kyoto-shi, Kyoto 606-8501 (JP); TAHARA Keisuke, Kyoto-shi, Kyoto 606-8501 (JP)
(74) Representative: Müller-Boré & Partner Patentanwälte PartG mbB
(86) International application number: PCT/JP2023/032011
(87) International publication number: WO 2024/048761

(57) **Abstract**

A detecting apparatus that detects an electron includes a container containing gas, an electron detector located inside the container, the electron detector detecting an electron of an electron cloud formed inside the container to generate an analog signal, a drift electrode facing the electron detector, and a second read circuit digitizing the analog signal generated by the electron detector to generate second data. The second read circuit includes a second buffer in which the second data is stored. The second read circuit transmits second final data including the second data stored in the second buffer to an external computer in response to a second trigger signal.

## Description

### Technical Field

An embodiment of the present disclosure relates to a detecting apparatus that detects an electron, a radiation identification apparatus, and a neutron imaging apparatus.

### Background Art

As disclosed in, for example, PTLs 1 to 3, there is known a detecting apparatus that detects Compton-scattered radiation and an electron produced by Compton scattering. The detecting apparatus includes a container in which gas is contained, an electron detector that detects an electron produced by Compton scattering, and a radiation detector that detects radiation scattered by Compton scattering.

Data regarding an electron detected by the electron detector is useful for analyzing radiation. For example, as described in PTL 1, information about the scattering direction of radiation is calculated from information about the position of the radiation detected by the radiation detector and information about the point of origin of the electron.

### Citation List

### Patent Literature

PTL 1: Japanese Unexamined Patent Application Publication No. 2015-148448
PTL 2: Japanese Unexamined Patent Application Publication No. 2016-161522
PTL 3: International Publication No. 2017/209059

### Summary of Invention

Data detected by the electron detector is transmitted to the computer. When all the data detected by the electron detector is transmitted to the computer, the computer is under heavy load.

The embodiment of the present disclosure aims to provide a detecting apparatus that can effectively solve such problems.

The embodiment of the present disclosure relates to the following [1] to [18].
[1] A detecting apparatus that detects an electron includes:
   a container containing gas;
   an electron detector located inside the container, the electron detector detecting an electron of an electron cloud formed inside the container to generate an analog signal;
   a drift electrode facing the electron detector;
   a second read circuit digitizing the analog signal generated by the electron detector to generate second data; and
   a computer capable of communicating with the second read circuit, wherein
   the second read circuit includes a second buffer in which the second data is stored, and
   the second read circuit transmits second final data including the second data stored in the second buffer to the computer in response to a second trigger signal.
[2] In the detecting apparatus according to [1], the detecting apparatus may include a logic circuit connected to the second read circuit, the second read circuit may generate a second hit signal when an intensity of the analog signal of the electron detector exceeds a threshold, and the logic circuit may generate the second trigger signal after a second delay time has elapsed since generation of the second hit signal in the electron detector.
[3] In the detecting apparatus according to [1], the detecting apparatus may include a logic circuit connected to the second read circuit, the electron detector may include a plurality of anode electrodes and a plurality of cathode electrodes, the analog signal of the electron detector may include anode analog signals generated by the plurality of anode electrodes and cathode analog signals generated by the plurality of cathode electrodes, the second read circuit may generate an anode hit signal when an intensity of the anode analog signal exceeds a threshold, and may generate a cathode hit signal when an intensity of the cathode analog signal exceeds a threshold, and the logic circuit may generate the second trigger signal in response to generation of both the anode hit signal and the cathode hit signal.
[4] In the detecting apparatus according to [3], the detecting apparatus may include a logic circuit connected to the second read circuit, and the logic circuit may generate the second trigger signal after a second delay time has elapsed since generation of both the anode hit signal and the cathode hit signal.
[5] In the detecting apparatus according to [2] or [4], the second delay time may be shorter than or equal to a maximum travel time, and the maximum travel time may be a time taken for an electron to travel from the drift electrode to the electron detector.
[6] In the detecting apparatus according to [2], [4], or [5], the second buffer of the second read circuit may store the second data during a second storage period, and the second storage period may be longer than or equal to the second delay time.
[7] In the detecting apparatus according to any one of [1] to [6], the second final data may include information about an intensity of the analog signal generated by the electron detector.
[8] In the detecting apparatus according to [7], the second read circuit may acquire information about the intensity of the analog signal generated by the electron detector at a sampling frequency of lower than or equal to 50 MHz.
[9] In the detecting apparatus according to [7], the second read circuit may acquire information about the intensity of the analog signal generated by the electron detector at a sampling frequency of higher than or equal to 10 MHz and lower than or equal to 20 MHz.
[10] In the detecting apparatus according to any one of [1] to [9], the second final data may include information about time when the second data is stored in the second buffer.
[11] In the detecting apparatus according to any one of [1] to [10], the second final data may include information about a position of arrival of an electron on the electron detector.
[12] In the detecting apparatus according to any one of [1] to [11], the electron cloud may be formed in a track of a recoil electron produced by Compton scattering.
[13] In the detecting apparatus according to any one of [1] to [11], the electron cloud may be formed in tracks of tritium and a proton produced by a nuclear reaction of a neutron.
[14] In the detecting apparatus according to [13], the electron detector may include a plurality of anode electrodes and a plurality of cathode electrodes, the analog signal of the electron detector may include a plurality of anode analog signals generated by the plurality of anode electrodes and a plurality of cathode analog signals generated by the plurality of cathode electrodes, the second read circuit may generate an anode hit signal with a differentiation between rise and fall of a signal when an intensity of the anode analog signal exceeds a threshold, and may generate a cathode hit signal with a differentiation between rise and fall of a signal when an intensity of the cathode analog signal exceeds a threshold, and the second final data may include a plurality of the anode hit signals corresponding to the plurality of anode electrodes, and a plurality of the cathode hit signals corresponding to the plurality of cathode electrodes.
[15] In the detecting apparatus according to [13], the electron detector may include a plurality of anode electrodes and a plurality of cathode electrodes, the analog signal of the electron detector may include a plurality of anode analog signals generated by the plurality of anode electrodes and a plurality of cathode analog signals generated by the plurality of cathode electrodes, the second read circuit may generate an anode hit signal when an intensity of the anode analog signal exceeds a threshold, and may generate a cathode hit signal when an intensity of the cathode analog signal exceeds a threshold, the second final data may include a plurality of pieces of anode TOT information related to the plurality of anode electrodes and a plurality of pieces of cathode TOT information related to the plurality of cathode electrodes, each piece of the anode TOT information may be information about a period in which a corresponding one of the anode hit signals is generated, and each piece of the cathode TOT information may be information about a period in which a corresponding one of the cathode hit signals is generated.
[16] A radiation identification apparatus includes:
   the detecting apparatus according to any one of [1] to [15]; and
   a computer receiving the first final data and the second final data, transmitted from the detecting apparatus, wherein
   the computer calculates a direction of incidence of radiation to the detecting apparatus based on the first final data and the second final data.
[17] A radiation identification apparatus includes:
   the detecting apparatus according to any one of [1] to [15]; and
   a computer receiving the first final data and the second final data, transmitted from the detecting apparatus, wherein
   the computer images a position of a radiation source based on the first final data and the second final data, the radiation source radiating radiation.
[18] A neutron imaging apparatus includes:
   the detecting apparatus according to [14] or [15]; and
   a computer receiving the second final data transmitted from the detecting apparatus, wherein
   the computer images a position of incidence of a neutron to the detecting apparatus based on the second final data.

According to the embodiment of the present disclosure, it is possible to reduce the amount of data related to electrons, transmitted to the computer.

### Brief Description of Drawings

[Fig. 1] Fig. 1 is a sectional view that shows an example of a detecting apparatus.
[Fig. 2] Fig. 2 is a perspective view that shows an example of an electron detector.
[Fig. 3] Fig. 3 is a sectional view that shows the example of the electron detector.
[Fig. 4] Fig. 4 is a perspective view that shows an example of a radiation detector.
[Fig. 5] Fig. 5 is a diagram that shows an example of Compton scattering that occurs in the detecting apparatus.
[Fig. 6] Fig. 6 is a diagram that shows a state where an electron reaches the electron detector.
[Fig. 7] Fig. 7 is a timing chart that shows an example of an analog signal generated by the radiation detector and an analog signal generated by the electron detector.
[Fig. 8] Fig. 8 is a block diagram that shows an example of a circuit for generating data.
[Fig. 9] Fig. 9 is a block diagram that shows an example of a second read circuit and a logic circuit.
[Fig. 10] Fig. 10 is a block diagram that shows an example of an anode read circuit.
[Fig. 11] Fig. 11 is a block diagram that shows an example of a first read circuit.
[Fig. 12] Fig. 12 is a timing chart that shows an example of signal processing.
[Fig. 13] Fig. 13 is a timing chart that shows an example of first final data and second final data transmitted to a computer.
[Fig. 14] Fig. 14 is a timing chart that shows an example of signal processing.
[Fig. 15] Fig. 15 is a timing chart that shows an example of signal processing in a first modification.
[Fig. 16] Fig. 16 is a block diagram that shows a second read circuit and a logic circuit in a second modification.
[Fig. 17] Fig. 17 is a timing chart that shows signal processing in the second modification.
[Fig. 18] Fig. 18 is a perspective view that shows an electron detector in a third modification.
[Fig. 19] Fig. 19 is a block diagram that shows an example of a second read circuit and a logic circuit in the third modification.
[Fig. 20] Fig. 20 is a block diagram that shows a first read circuit, a second read circuit, and a logic circuit in a fourth modification.
[Fig. 21] Fig. 21 is a timing chart that shows signal processing in the fourth modification.
[Fig. 22] Fig. 22 is a sectional view that shows an example of a detecting apparatus.
[Fig. 23] Fig. 23 is a diagram that shows an example of absorption of a neutron that occurs in the detecting apparatus.
[Fig. 24] Fig. 24 is a timing chart that shows an example of analog signals generated by the electron detector.
[Fig. 25] Fig. 25 is a timing chart that shows an example of hit signals.
[Fig. 26] Fig. 26 is a block diagram that shows an example of a circuit for generating data.
[Fig. 27] Fig. 27 is a timing chart that shows an example of signal processing.
[Fig. 28] Fig. 28 is a diagram that shows the configuration of an apparatus for measuring a maximum travel time.
[Fig. 29] Fig. 29 is a graph that shows the number of electrons detected by the apparatus of Fig. 28.
[Fig. 30] Fig. 30 is a timing chart that shows analog signals in a sixth modification.
[Fig. 31] Fig. 31 is a timing chart that shows signal processing in a seventh modification.
[Fig. 32] Fig. 32 is a timing chart that shows signal processing in the seventh modification.

### Description of Embodiments

Embodiments described below are examples of the embodiment of the present disclosure, and the present disclosure should not be interpreted limitedly to these embodiments. In the specification, the terms "substrate", "base", "sheet", "film", and the like are not distinguished from each other by the difference in name. For example, "substrate" and "base" are concepts that can include components called sheets or films. Furthermore, terms "parallel", "orthogonal", and the like, values of length and angle, and the like that determine shapes, geometrical conditions and the degrees of them, used in the specification, are not limited to strict meanings and are interpreted so as to include the range of degrees to which similar functions can be expected.

In the attached drawings to be referenced in the specification, the same or similar reference signs denote the same portions or portions having similar functions, and the repeated description can be omitted. The scale ratio of the drawings can be different from the actual ratio for the sake of convenience of illustration, and a portion of components can be omitted from the drawings.

In the specification, when a plurality of upper limit candidates and a plurality of lower limit candidates are listed for a parameter, the numeric range of the parameter may be a combination of a selected one upper limit candidate and a selected one lower limit candidate. For example, the sentence "Parameter B, for example, may be larger than or equal to A1, may be larger than or equal to A2, or may be larger than or equal to A3. Parameter B, for example, may be smaller than or equal to A4, may be smaller than or equal to A5, or may be smaller than or equal to A6." will be discussed. In this case, the numeric range of parameter B may be larger than or equal to A1 and smaller than or equal to A4, may be larger than or equal to A1 and smaller than or equal to A5, may be larger than or equal to A1 and smaller than or equal to A6, may be larger than or equal to A2 and smaller than or equal to A4, may be larger than or equal to A2 and smaller than or equal to A5, may be larger than or equal to A2 and smaller than or equal to A6, may be larger than or equal to A3 and smaller than or equal to A4, may be larger than or equal to A3 and smaller than or equal to A5, or may be larger than or equal to A3 and smaller than or equal to A6.

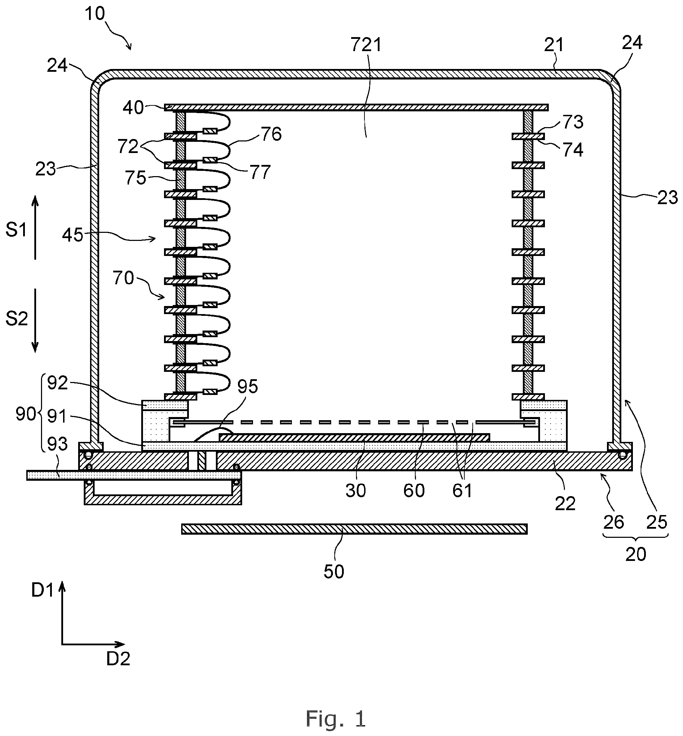

Hereinafter, the configuration of the detecting apparatus 10 according to the embodiment of the present disclosure will be described in detail with reference to the attached drawings. First, an overview of the detecting apparatus 10 will be described. Fig. 1 is a sectional view that shows an example of the detecting apparatus 10.

### (Detecting Apparatus)

The detecting apparatus 10 includes a container 20, an electron detector 30 and a drift electrode 40 located inside the container 20, and a radiation detector 50. The container 20 is, for example, a chamber. At least inert gas, such as argon and xenon, is contained in the container 20. In addition to the inert gas, quenching gas with quenching properties, such as carbon dioxide and methane, may be contained in the container 20.

The container 20 includes a first part 21, a second part 22 facing the first part 21 in a first direction D1, and a side part 23 extending from the first part 21 to the second part 22. The detecting apparatus 10 can be used to detect radiation that enters the container 20 through the first part 21. As shown in Fig. 1, the container 20 may have a cylindrical shape. In other words, the side part 23 may have a circular cross-section. Although not shown the drawing, the container 20 may have a shape other than the cylindrical shape, such as a cubic shape or a rectangular parallelepiped shape. The first part 21 may be curved to convex outward from the container 20. The container 20 may have a corner 24 located between the first part 21 and the side part 23. The first part 21 may spread out flat. The corner 24 may include a surface spreading out in a direction different from the first part 21 or the side part 23.

An object that emits radiation is located outside the container 20. The first part 21 may include a surface closest to the object of the surfaces of the container 20.

The material of the container 20 preferably allows radiation to pass easily. This can suppress the absorption or scattering of radiation by the container 20 when the radiation passes through the container 20. The container 20 may include, for example, plastic or metal. The plastic may be fiber reinforced plastic. When metal is used, the container 20 may be made of a single metal element or may be made of an alloy. Examples of the metal include aluminum and aluminum alloys. To reduce the weight of the container 20, metals with a specific gravity of less than four may be used.

When the container 20 includes plastic, the thickness of the container 20 is, for example, larger than or equal to 1 mm, may be larger than or equal to 5 mm, or may be larger than or equal to 10 mm. The thickness of the container 20 is, for example, smaller than or equal to 30 mm, may be smaller than or equal to 25 mm, or may be smaller than or equal to 20 mm.

When the container 20 includes metal, the thickness of the container 20 is, for example, larger than or equal to 2 mm, may be larger than or equal to 3 mm, or may be larger than or equal to 5 mm. The thickness of the container 20 is, for example, smaller than or equal to 20 mm, may be smaller than or equal to 15 mm, or may be smaller than or equal to 10 mm.

The drift electrode 40, the electron detector 30, and the radiation detector 50 are arranged in this order from the first part 21 toward the second part 22. In other words, the drift electrode 40 is located closer to the first part 21 than the electron detector 30. The radiation detector 50 is located closer to the second part 22 than the electron detector 30. The phrase "component element A is located closer to the first part 21 than component element B" means that component element A is located on the side of component element B, indicated by the arrow S1 in Fig. 1. The arrow S1 indicates a direction from the second part 22 toward the first part 21. The distance from component element A to the first part 21 may be longer or shorter than the distance from component element B to component element A.

The drift electrode 40 may be more proximate to the first part 21 than to the second part 22. The electron detector 30 and the radiation detector 50 may be more proximate to the second part 22 than to the first part 21.

The radiation detector 50 may be located outside the container 20. For example, the radiation detector 50 may be located outside the second part 22. The radiation detector 50 may face the drift electrode 40 across the second part 22.

Although not shown in the drawing, the radiation detector 50 may be located inside the container 20. For example, the radiation detector 50 may be located between the second part 22 and the electron detector 30.

The electron detector 30, the drift electrode 40, and the radiation detector 50 will be described in detail.

When radiation enters the inside of the container 20 and collides with gas, Compton scattering may occur. When Compton scattering occurs, a recoil electron is produced. In addition, ionized electrons are produced along the track of the recoil electron. The electron detector 30 detects the ionized electrons. The track and energy of the recoil electron can be calculated by detecting the ionized electrons.

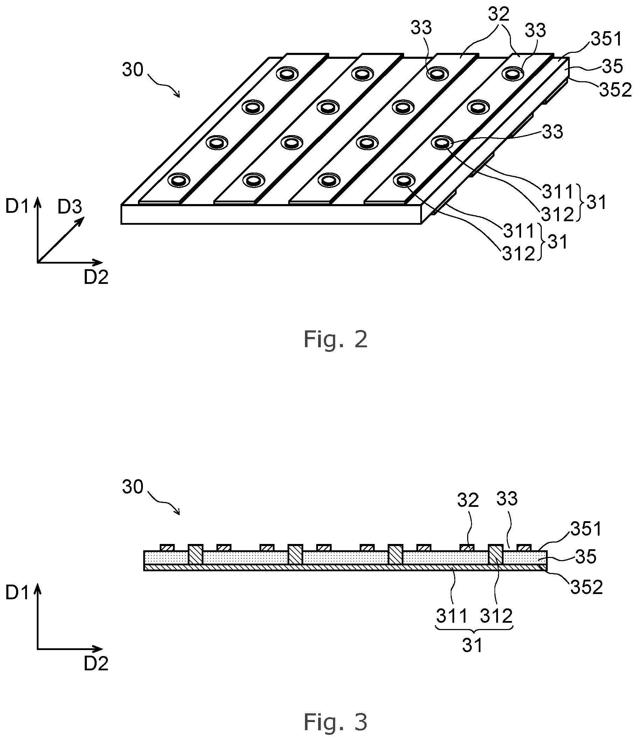

Fig. 2 is a perspective view that shows an example of the electron detector 30. The electron detector 30 includes a plurality of electrodes. Electrons produced through Compton scattering reach some electrodes of the plurality of electrodes. Some electrodes generate analog signals as a result of arrival of the electrons. Information about the positions of arrival of the electrons on the electron detector 30 can be obtained by identifying some electrodes that have generated the analog signals. Information about the energy of the electrons that have reached the electron detector 30 can be obtained based on the intensities of the analog signals. The intensities of the analog signals are calculated based on the voltages, amplitudes, and the like of the analog signals. For example, the voltages or amplitudes of the analog signals may be used as the intensities of the analog signals.

The plurality of electrodes of the electron detector 30 may include a plurality of anode electrodes 31, a plurality of cathode electrodes 32, and a base 35. The base 35 includes a first face 351 and a second face 352 that spread out in a direction intersecting the first direction D1. The first face 351 faces the drift electrode 40. The second face 352 is located on the opposite side from the first face 351.

The plurality of cathode electrodes 32 may be located on the first face 351. The plurality of cathode electrodes 32 may be arranged in a second direction D2 orthogonal to the first direction D1. Each cathode electrode 32 may extend in a third direction D3 orthogonal to the first direction D1 and the second direction D2.

The plurality of anode electrodes 31 may be located on the second face 352 and may include a plurality of line parts 311 arranged in the third direction D3. Each line part 311 may extend in the second direction D2. Fig. 3 is a sectional view that shows an example of the electron detector 30. A plurality of through parts 312 arranged in the second direction D2 and extending through the base 35 may be connected to each line part 311. The surfaces of the through parts 312 may be located at openings 33 formed in the cathode electrodes 32.

Electrons produced by Compton scattering reach some of the plurality of anode electrodes 31 and some of the plurality of cathode electrodes 32. Some of the anode electrodes 31 generate anode analog signals as a result of arrival of the electrons. Information about the positions, in the third direction D3, of the electrons that have reached the electron detector 30 can be obtained by identifying some of the anode electrodes 31 that have generated the anode analog signals. Some of the cathode electrodes 32 generate cathode analog signals as a result of arrival of the electrons. Information about the positions, in the second direction D2, of the electrons that have reached the electron detector 30 can be obtained by identifying some of the cathode electrodes 32 that have generated the cathode analog signals. In this way, the electron detector 30 shown in Figs. 2 and 3 can efficiently provide information about the positions, in the second direction D2, and the positions, in the third direction D3, of electrons that have reached the electron detector 30.

The electron detector 30 may be provided with a second read circuit 130 (described later) for processing analog signals. The second read circuit 130 may be provided on a member different from the electron detector 30. In this case, the electron detector 30 may be provided with a cable, a hermetic connector, and a wiring board to carry analog signals to the second read circuit 130.

The drift electrode 40 is disposed so as to face the electron detector 30. For example, the drift electrode 40 faces the electron detector 30 in the first direction D1. In this case, the drift electrode 40 includes a surface that spreads out in a direction orthogonal to the first direction D1. An electric field heading from the electron detector 30 toward the drift electrode 40 is generated between the electron detector 30 and the drift electrode 40. Ionized electrons accompanying a recoil electron produced by Compton scattering are attracted toward the electron detector 30 by the electric field.

The radiation detector 50 detects scattered radiation. In the present embodiment, the radiation scattered between the electron detector 30 and the drift electrode 40 passes through the electron detector 30 and the second part 22 of the container and is then detected by the radiation detector 50. The radiation detector 50 can detect the position and energy of radiation that have reached the radiation detector 50.

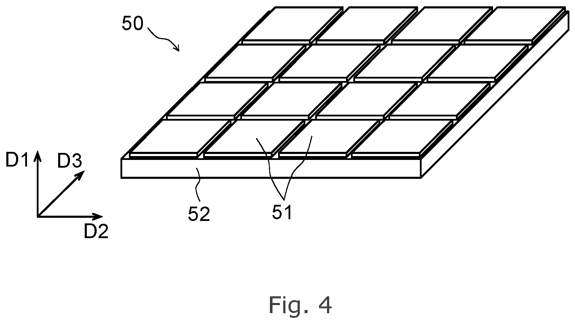

Fig. 4 is a perspective view that shows an example of the radiation detector 50. The radiation detector 50 may include a plurality of detecting elements 51 and a circuit board 52 that supports the detecting elements 51. The plurality of detecting elements 51 may be arranged in a direction intersecting the first direction D1. For example, the plurality of detecting elements 51 may be arranged in the second direction D2 and the third direction D3 that are orthogonal to the first direction D1.

Radiation reaches some of the plurality of detecting elements 51. Some of the detecting elements 51 generate analog signals as a result of the arrival of the radiation. Information about the positions of arrival of the radiation on the radiation detector 50 can be obtained by identifying some of detecting elements 51 that have generated the analog signals. Information about the energy of the radiation that has reached the radiation detector 50 can be obtained based on the intensities of the analog signals. The intensities of the analog signals are calculated based on the voltages, amplitudes, and the like of the analog signals.

The configuration of the detecting element 51 is optional as long as the detecting element 51 can detect radiation.

For example, the detecting element 51 may include a scintillator that is excited by scattered radiation to emit fluorescence, and a photodetector that detects the fluorescence. The photodetector may include, for example, an avalanche photodiode.

The detecting element 51 may include a semiconductor detecting element that detects the scattered radiation. The semiconductor detecting element may, for example, include a semiconductor containing cadmium zinc telluride.

The radiation detector 50 may include a first detecting element 51 capable of detecting radiation with energy within a first range, and a second detecting element 51 capable of detecting radiation with energy within a second range different from the first range. Thus, the range of energy of radiation that can be detected by the radiation detector 50 can be expanded.

Radiation detected by detecting element 51 is processed as an electrical signal by the circuit board 52. The circuit board 52 may include circuits, wires, and the like, for processing electrical signals. The electrical signals may be transmitted to the outside of the container 20 through, for example, a cable, a hermetic connector, or a wiring board, connected to the circuit board 52.

The other component elements of the detecting apparatus 10 will be described.

As shown in Fig. 1, the detecting apparatus 10 may include an auxiliary drift electrode 70 located between the electron detector 30 and the drift electrode 40. The auxiliary drift electrode 70 is provided to increase the uniformity of distribution of the electric field between the electron detector 30 and the drift electrode 40.

The auxiliary drift electrode 70 may include a plurality of ring electrodes 72. The plurality of ring electrodes 72 is arranged in a direction in which the electron detector 30 and the drift electrode 40 face each other. The ring electrode 72 includes a ring first face 73 facing the drift electrode 40 and a ring second face 74 located on the opposite side from the ring first face 73.

The ring electrode 72 may include an opening 721. The opening 721 overlaps the electron detector 30 in the facing direction. The ring electrode 72 does not need to overlap the electron detector 30 in the facing direction. The ring electrode 72 may overlap the drift electrode 40 in the facing direction.

The auxiliary drift electrode 70 may include a spacer 75 disposed between two ring electrodes 72 adjacent in the facing direction. The spacer 75 determines the distance between two ring electrodes 72 adjacent in the facing direction. The distance is determined according to the number of ring electrodes 72, the voltage between the electron detector 30 and the drift electrode 40, and the like.

The drift electrode 40 may be attached to the auxiliary drift electrode 70. For example, the auxiliary drift electrode 70 may include the spacer 75 located between the drift electrode 40 and the ring electrode 72. A structure including the drift electrode 40 and the plurality of ring electrodes 72 is also referred to as drift cage 45.

The auxiliary drift electrode 70 may include a wire 76 that electrically connects two ring electrodes 72 adjacent in the facing direction. The auxiliary drift electrode 70 may include a wire 76 that electrically connects the drift electrode 40 and the ring electrode 72 adjacent in the facing direction. The auxiliary drift electrode 70 may include a resistor 77 inserted in the path of the wire 76. The voltage between the two ring electrodes 72 can be adjusted by electrically connecting the two adjacent ring electrodes 72. Thus, the potentials of the ring electrodes 72 arranged in the facing direction can be changed in a stepwise manner. For example, it is assumed that the potential of the drift electrode 40 is - 4000 V, the potential of the electron detector 30 is 0 V, and the 20 ring electrodes 72 are disposed between the drift electrode 40 and the electron detector 30. In this case, the potentials of the plurality of ring electrodes 72 arranged from the drift electrode 40 toward the electron detector 30 can be changed in a stepwise manner like -3800 V, -3600 V, -3400 V, ... Thus, it is possible to increase the uniformity of electric field formed in the space between the drift electrode 40 and the electron detector 30.

As shown in Fig. 1, the auxiliary drift electrode 70 may be supported by a relay board 90. The relay board 90 may support the electron detector 30. For example, the relay board 90 may include a first board 91 that supports the electron detector 30 and a second board 92 that supports the auxiliary drift electrode 70. The second board 92 may be located between the first board 91 and the auxiliary drift electrode 70.

As shown in Fig. 1, the detecting apparatus 10 may include an electronic amplifier 60 located between the electron detector 30 and the drift electrode 40. The electronic amplifier 60 is, for example, disposed so as to face the electron detector 30 and the drift electrode 40 in the first direction D1.

The electronic amplifier 60 is configured to cause electron avalanche amplification. The electronic amplifier 60 includes an electrode having a higher potential than the potential of the drift electrode 40. The electronic amplifier 60 may include a plurality of through-holes 61 that extend through the electronic amplifier 60. The electronic amplifier 60 may be configured to generate electric fields heading toward the drift electrode 40 in the through-holes 61.

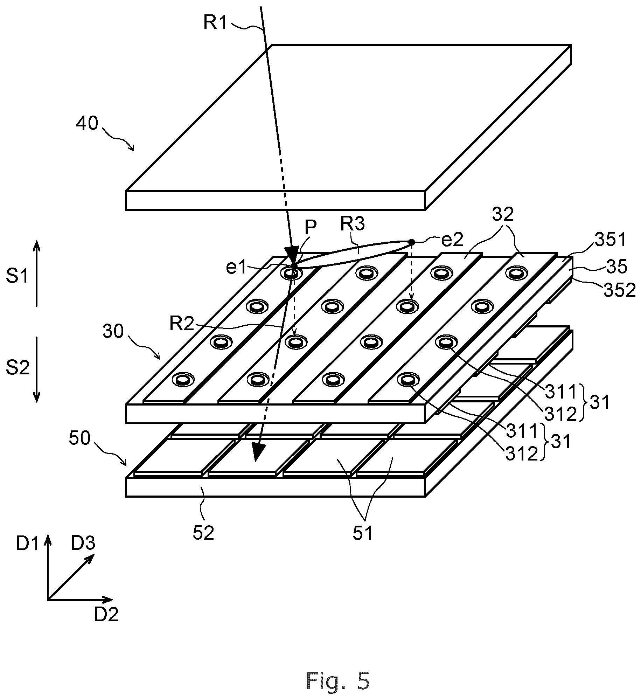

Next, Compton scattering that occurs in the detecting apparatus 10 will be described. Fig. 5 is a diagram that shows an example of Compton scattering. The reference sign R1 represents radiation that passes through the first part 21 of the container 20 and enters the container 20. The radiation R1 is, for example, charged particle radiation (such as alpha radiation and beta radiation), uncharged particle radiation (such as neutrinos and neutron radiation), electromagnetic waves (such as gamma radiation and X-radiation), or non-ionizing radiation (such as ultraviolet light). The radiation R1 passes through the drift electrode 40 and then reaches the space between the electron detector 30 and the drift electrode 40.

When the radiation R1 collides with gas, Compton scattering may occur. The reference sign P represents the position where scattering has occurred. The position P is also referred to as scattering point. The reference sign R2 represents scattered radiation. The radiation R2 passes through the electron detector 30 and then reaches the radiation detector 50. When the radiation detector 50 is located outside the container 20, the radiation R2 also passes through the second part 22 of the container 20. The radiation R2 is detected by some of the detecting elements 51 among the plurality of detecting elements 51. For example, the radiation R2 is detected by one detecting element 51. Thus, the position of arrival and energy of the radiation R2 can be calculated.

When Compton scattering occurs, a recoil electron is produced. The reference sign R3 indicates an electron cloud formed in the track of the recoil electron. The reference sign e1 represents an electron located at the starting point of the electron cloud R3. The electron e1 may be located at the scattering point P. The reference sign e2 represents an electron located at the end point of the electron cloud R3.

Each electron of the electron cloud R3 travels toward the electron detector 30 due to an electric field E1. Such travel is also referred to as drift. Each electron of the electron cloud R3 that has reached the electron detector 30 is detected by the anode electrode 31 and the cathode electrode 32 of the electron detector 30. Thus, the position and energy of each electron of the electron cloud R3 can be calculated. In addition, the track and energy of the recoil electron and the scattering point P can be calculated.

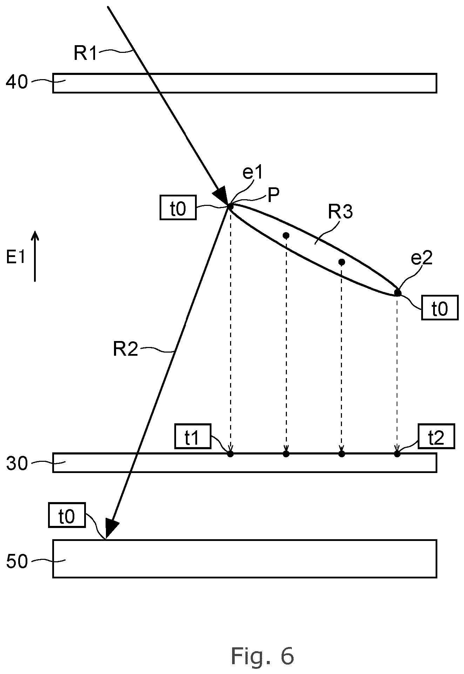

The radiation R2 travels from the scattering point P to the radiation detector 50 substantially at the velocity of light. The recoil electron also travels from the position of the electron e1 to the position of the electron e2 substantially at the velocity of light. On the other hand, the velocity V at which the electron cloud R3 travels toward the electron detector 30 is slower than the velocity of light. Therefore, each electron of the electron cloud R3 reaches the electron detector 30 after the radiation R2 reaches the radiation detector 50. The time taken for each electron of the electron cloud R3 to reach the electron detector 30 varies depending on the distance from the electron to the electron detector 30. In the example shown in Fig. 6, the distance from the electron e2 to the electron detector 30 is shorter than the distance from the electron e1 to the electron detector 30. Therefore, the electron e2 reaches the electron detector 30 earlier than the electron e1.

In Fig. 6, the reference signs t0, t1, and t2 enclosed in rectangular frames respectively represent the time when the electron of the radiation R2 and the electrons of the electron cloud R3 appear at the positions represented by the reference signs or the time when the electrons reach the positions. When a time taken for the radiation R2 and the recoil electron to travel is ignored, the time at which the electron e1 is produced, the time at which the electron e2 is produced, and the time at which the radiation R2 reaches the radiation detector 50 all are t0. The electron e1 reaches the electron detector 30 at time t1 after time t0. The electron e2 reaches the electron detector 30 at time t2. Time t2 is later than time t0, and time t1 is later than time t2.

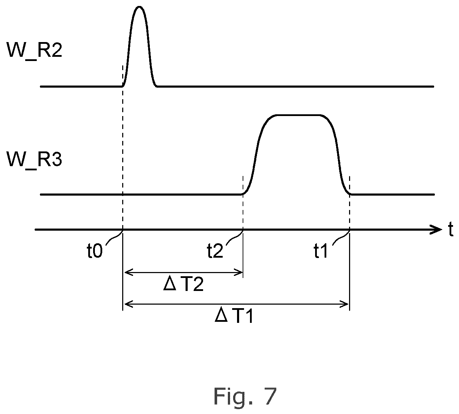

When the radiation detector 50 detects the radiation R2, the radiation detector 50 generates an analog signal. When the electron detector 30 detects an electron, the electron detector 30 generates an analog signal. Fig. 7 is a timing chart that shows an example of an analog signal W_R2 generated by the radiation detector 50 and an analog signal W_R3 generated by the electron detector. The analog signal of the radiation detector 50 is generated at time t0. A time ΔT2 is a difference between time t0 and time t2. The time ΔT2 is equivalent to a time taken for the electron e2 to travel from the end point of the electron cloud R3 to the electron detector 30. A time ΔT1 is a difference between time t0 and time t1. The time ΔT1 is equivalent to a time taken for the electron e1 to travel from the start point of the electron cloud R3 to the electron detector 30.

As the distance from the electron cloud R3 to the electron detector 30 extends, electrons take longer time to travel to the electron detector 30. A time taken for travel is longest when an electron is generated at the drift electrode 40. The time taken for the electron to travel from the drift electrode 40 to the electron detector 30 is also referred to as maximum travel time TMAX. The maximum travel time TMAX is determined based on the gap (also known as drift length) between the drift electrode 40 and the electron detector 30 and the drift velocity V of the electron. The drift velocity V is determined based on the strength of the electric field, the type of gas and the pressure of gas in the container 20, and the like. For example, in the following condition 1 and condition 2, the maximum travel time TMAX is 10.24 µs.

### (Condition 1)

Drift length: 40 cm, Electric field strength: 400 V/cm,
Type of gas: mixed gas including argon and ethane, and Pressure of gas: 1 atm

### (Condition 2)

Drift length: 60 cm, Electric field strength: 600 V/cm,
Type of gas: carbon tetrafluoride, and Pressure of gas: 3 atm

The maximum travel time TMAX is, for example, longer than or equal to 3 µs, may be longer than or equal to 5 µs, or may be longer than or equal to 7 µs. The maximum travel time TMAX is, for example, shorter than or equal to 30 µs, may be shorter than or equal to 20 µs, or may be shorter than or equal to 15 µs.

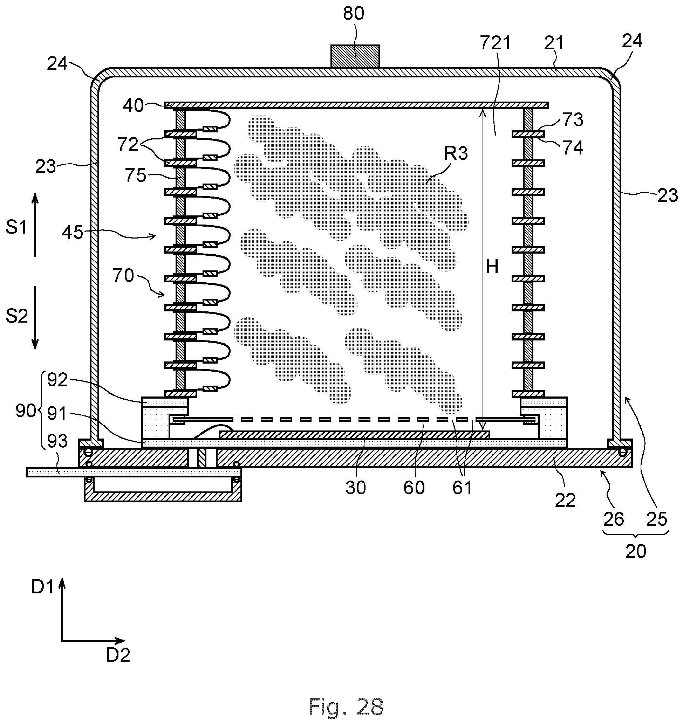

The maximum travel time TMAX may be measured by using an apparatus including the electron detector 30 and the drift electrode 40. Fig. 28 is a diagram that shows the configuration of an apparatus for measuring a maximum travel time TMAX. The apparatus includes a container 20, an electron detector 30 and a drift electrode 40 located inside the container 20, and a radiation source 80 located on the outer surface of the first part 21 of the container 20. The electron detector 30 and the drift electrode 40 face each other in the first direction D1 with a gap H. The radiation source 80 is a radiation generating source. The radiation source 80 is, for example, a radiation standard gamma-ray source (nuclide: Ba-1133, code number; BA402) of Public interest incorporated association Japan Radioisotope Association. When Compton scattering occurs inside the container 20 due to radiation from the radiation source 80, a recoil electron is produced to form an electron cloud R3.

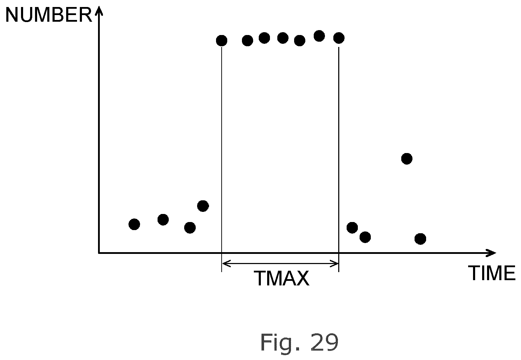

Fig. 29 is a graph that shows the number of electrons detected by the electron detector 30 of the apparatus of Fig. 28. The abscissa axis of the graph of Fig. 29 represents time. The ordinate axis of the graph of Fig. 29 represents the number of electrons. A plurality of points of the graph of Fig. 29 each indicates the number of electrons detected at a predetermined sampling frequency. The sampling frequency is, for example, lower than or equal to 50 MHz. The sampling frequency may be higher than or equal to 10 MHz and lower than or equal to 20 MHz.

As shown in Fig. 29, the graph includes a period during which the number of electrons is large and the number is substantially constant. This period corresponds to the maximum travel time TMAX. The maximum travel time TMAX is calculated by identifying the period during which the number of electrons is large and the number is substantially constant. The drift velocity V of electrons is calculated by H / TMAX.

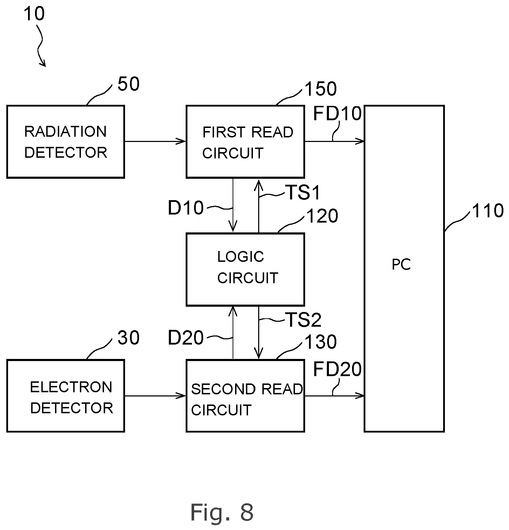

Next, a circuit for generating data by digitizing an analog signal of the radiation detector 50 and an analog signal of the electron detector 30 will be described. Fig. 8 is a block diagram that shows an example of the circuit.

The detecting apparatus 10 includes at least a first read circuit 150 and a second read circuit 130. The first read circuit 150 and the second read circuit 130 can communicate with a computer 110. The computer 110 receives digital data transmitted from the first read circuit 150 and the second read circuit 130 and processes the digital data. For example, the computer 110 calculates the direction of incidence of radiation into the container 20 based on first final data and second final data (described later). When the size of the detecting apparatus 10 can be ignored as compared to the distance from the radiation source that emits radiation to the detecting apparatus 10 as in the case of a celestial body, one direction of incidence is determined for one radiation source. In this case, the positional relationship between the direction of incidence of the radiation and the corresponding radiation source is imaged. On the other hand, when the size of the detecting apparatus 10 cannot be ignored as compared to the distance from the radiation source that emits radiation to the detecting apparatus 10 like SPECT/PET or BNCT, a plurality of scattering points is detected for one radiation source, and the direction of incidence is determined from the scattering points. In this case, the position at which the direction of incidence identified by each scattering point converges is identified as the position of the radiation source and imaged. In this way, the combination of the detecting apparatus 10 with the computer 110 can function as a radiation identification apparatus that calculates the direction of incidence of radiation or images the position or the like of a radiation source for radiation. The computer 110 may image an electron cloud or the like that occurs inside the container 20. In this case, the combination of the detecting apparatus 10 with the computer 110 can function as an electronic imaging apparatus that images electrons. The computer 110 may be a general-purpose personal computer or may be a calculation processing module suitable for the detecting apparatus 10.

SPECT is a single photon emission computerized tomography (single photon emission CT). BNCT is a Boron neutron capture therapy. PET is a positron emission tomography.

The first read circuit 150 digitizes an analog signal generated by the radiation detector 50 to generate first data D10. The first data D10 is stored in a first buffer (described later). The first read circuit 150 transmits first final data FD10 to the computer 110 in response to input of a first trigger signal TS1. The first final data FD10 includes the first data D10 stored in the first buffer.

The second read circuit 130 digitizes an analog signal generated by the electron detector 30 to generate second data D20. The second data D20 is stored in a second buffer (described later). The second read circuit 130 transmits second final data FD20 to the computer 110 in response to input of a second trigger signal TS2. The second final data FD20 includes the second data D20 stored in the second buffer.

As shown in Fig. 8, the detecting apparatus 10 may include a logic circuit 120 connected to the second read circuit 130. The logic circuit 120, for example, generates the first trigger signal TS1 based on the second data D20 generated by the second read circuit 130. For example, the first trigger signal TS1 is generated in response to generation of a second hit signal (described later) of the second data D20. The logic circuit 120 may generate the second trigger signal TS2 based on the second data D20. For example, the second trigger signal TS2 is generated in response to generation of a second hit signal. The logic circuit 120 may be connected to both the first read circuit 150 and the second read circuit 130. In this case, the logic circuit 120 may generate trigger signals such as the first trigger signal TS1 and the second trigger signal TS2 based on both the first data D10 and the second data D20.

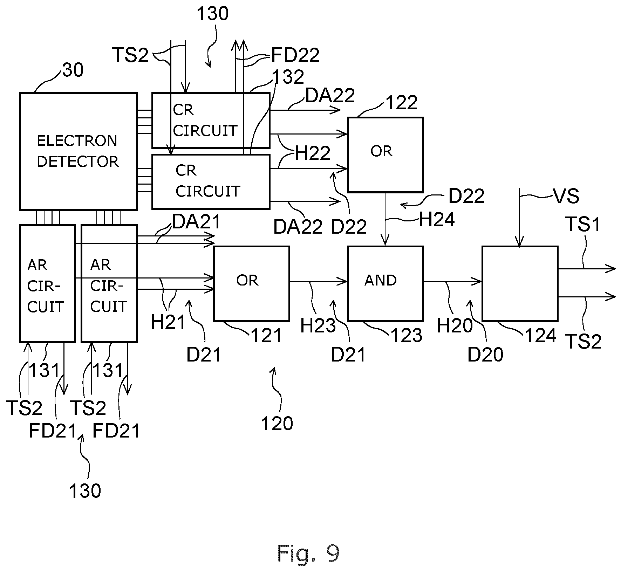

Fig. 9 is a block diagram that shows an example of the second read circuit 130 and the logic circuit 120. The second read circuit 130 may include an anode read circuit 131 and a cathode read circuit 132.

The anode read circuit 131 digitizes each of anode analog signals generated by the plurality of anode electrodes 31. Digital data generated by the anode read circuit 131 is also referred to as twenty-first data D21. The twenty-first data D21 is part of the second data D20. The twenty-first data D21 may include a twenty-first hit signal H21. The "hit signal" is a signal generated by binarizing an analog signal. When the intensity of an analog signal exceeds a threshold, the hit signal indicates a High state. When the intensity of an analog signal is less than or equal to the threshold, the hit signal indicates a Low state. The twenty-first hit signal H21 is a signal generated by binarizing an anode analog signal. The anode read circuit 131 may transmit the twenty-first hit signal H21 to the logic circuit 120.

As shown in Fig. 9, the second read circuit 130 may include a plurality of the anode read circuits 131. The number of anode read circuits 131 is determined according to the number of anode electrodes 31 of the electron detector 30. When, for example, the number of anode electrodes 31 is 256 and the number of analog signals that can be processed by the single anode read circuit 131 is 128, the second read circuit 130 includes two anode read circuits 131.

The anode read circuit 131 may transmit twenty-first final data FD21 to the computer 110 in response to input of the second trigger signal TS2. The twenty-first final data FD21 includes the twenty-first data D21. The twenty-first final data FD21 is part of the second final data FD20.

The cathode read circuit 132 digitizes each of the cathode analog signals generated by the plurality of cathode electrodes 32. The digital data generated by the cathode read circuit 132 is also referred to as twenty-second data D22. The twenty-second data D22 is part of the second data D20. The twenty-second data D22 may include a twenty-second hit signal H22. The twenty-second hit signal H22 is a signal generated by binarizing a cathode analog signal. The cathode electrode 32 may transmit the twenty-second hit signal H22 to the logic circuit 120.

As shown in Fig. 9, the second read circuit 130 may include a plurality of the cathode read circuits 132. The number of cathode read circuits 132 is determined according to the number of cathode electrodes 32 of the electron detector 30. When, for example, the number of cathode electrodes 32 is 256 and the number of analog signals that can be processed by the single cathode read circuit 132 is 128, the second read circuit 130 includes two cathode read circuits 132.

The cathode read circuit 132 may transmit twenty-second final data FD22 to the computer 110 in response to input of the second trigger signal TS2. The twenty-second final data FD22 includes the twenty-second data D22. The twenty-second final data FD22 is part of the second final data FD20.

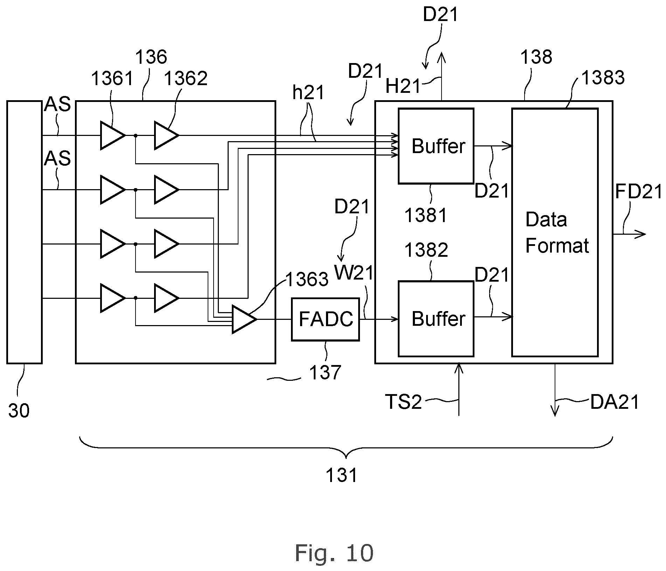

The anode read circuit 131 will be described in detail. Fig. 10 is a block diagram that shows an example of the configuration of the anode read circuit 131.

The anode read circuit 131 may include a plurality of amplifiers 1361. Each amplifier 1361 amplifies a corresponding one anode analog signal AS. The anode read circuit 131 may include a plurality of comparators 1362. Each comparator 1362 may binarize the anode analog signal AS amplified by a corresponding one of the amplifiers 1361 to generate a twenty-first hit signal h21. The anode read circuit 131 may include an amplifier 1363. The amplifier 1363 adds the plurality of anode analog signals AS amplified by the plurality of amplifiers 1361. The intensity of analog signal output from the amplifier 1363 indicates the intensity of electrons detected by the anode electrodes 31. For example, the waveform of the analog signal output from the amplifier 1363 shows the waveform of electrons detected by the anode electrodes 31. The plurality of amplifiers 1361, the plurality of comparators 1362, and the amplifier 1363 may be made up of a first integrated circuit 136. The first integrated circuit 136 is, for example, an ASIC.

The anode read circuit 131 may include an AD converter 137. The AD converter 137 digitizes the analog signal output from the amplifier 1363. The data digitized by the AD converter 137 is also referred to as twenty-first intensity data W21. The twenty-first intensity data W21 is part of the twenty-first data D21. The AD converter 137 may be a flash AD converter. In this case, an analog signal is digitized at high speed. The sampling rate of the AD converter 137 is, for example, higher than or equal to 1 MHz, may be higher than or equal to 5 MHz, or may be higher than or equal to 10 MHz. The sampling rate of the AD converter 137 is, for example, lower than or equal to 50 MHz, may be lower than or equal to 30 MHz, or may be lower than or equal to 20 MHz. The amount of data generated by the AD converter 137 can be reduced by setting a low sampling rate. Thus, the load on the computer 110 can be reduced.

The anode read circuit 131 may include a twenty-first buffer 1381 and a twenty-second buffer 1382. Buffers included in the second read circuit 130, such as the twenty-first buffer 1381 and the twenty-second buffer 1382, are also referred to as second buffers.

The twenty-first buffer 1381 and the twenty-second buffer 1382 are, for example, ring buffers. The twenty-first buffer 1381 and the twenty-second buffer 1382 each store the twenty-first data D21 in itself during a second storage period. The twenty-first buffer 1381 may temporarily hold the twenty-first hit signals h21. The twenty-first buffer 1381 may temporarily hold a twenty-first hit signal H21 obtained by processing the plurality of twenty-first hit signals h21 by using an OR circuit. The twenty-first hit signal H21 indicates a High state when at least one of the plurality of anode analog signals input to the anode read circuit 131 is in a High state. The twenty-second buffer 1382 may temporarily hold the twenty-first intensity data W21. The second storage period may be shorter than or equal to the maximum travel time TMAX.

The anode read circuit 131 may output the twenty-first hit signal H21 to the logic circuit 120. The anode read circuit 131 may output, to the logic circuit 120, the twenty-first hit signal H21 before being stored in the twenty-first buffer 1381.

When the second trigger signal TS2 is input to the anode read circuit 131, the twenty-first data D21 stored in the twenty-first buffer 1381 and the twenty-second buffer 1382 at that time is output from the twenty-first buffer 1381 and the twenty-second buffer 1382. The anode read circuit 131 may include a second data processing unit 1383 that processes the output twenty-first data D21. The second data processing unit 1383 generates twenty-first final data FD21 to be transmitted to the computer 110.

The twenty-first final data at least partially includes information of the twenty-first data D21. For example, the twenty-first final data FD21 may include information of the twenty-first hit signal H21. For example, the twenty-first final data FD21 may include the twenty-first intensity data W21. The format of the information of the twenty-first data D21 included in the twenty-first final data FD21 may be the same as or different from the format of the twenty-first data D21.

The twenty-first final data FD21 may include information about the time at which the twenty-first data D21 is stored in the twenty-first buffer 1381 and the twenty-second buffer 1382. The twenty-first final data FD21 may include information about the positions of the anode electrodes 31 that have detected electrons. In other words, the twenty-first final data FD21 may include information about the positions of arrival of electrons on the electron detector 30.

The twenty-first buffer 1381, the twenty-second buffer 1382, and the second data processing unit 1383 may be made up of a second integrated circuit 138. The second integrated circuit 138 is, for example, an FPGA.

The anode read circuit 131 may output a data acquisition signal DA21 to the logic circuit 120. The data acquisition signal DA21 is a signal that enters a High state when writing of the twenty-first buffer 1381 and the twenty-second buffer 1382 is being performed.

The configuration of the cathode read circuit 132 may be the same as the configuration of the anode read circuit 131.

Next, the logic circuit 120 will be described by referring back to Fig. 9.

When the second read circuit 130 includes a plurality of the anode read circuits 131, the logic circuit 120 may include an OR circuit 121 as shown in Fig. 9. The twenty-first hit signal H21 from each of the anode read circuits 131 is input to the OR circuit 121. The OR circuit 121 processes the plurality of twenty-first hit signals H21 to output a twenty-third hit signal H23. The twenty-third hit signal H23 indicates a High state when at least one of the plurality of twenty-first hit signals H21 is in a High state. In other word, the twenty-third hit signal H23 indicates a High state when at least one of the plurality of anode analog signals generated by the plurality of anode electrodes 31 exceeds a threshold. The twenty-third hit signal H23 indicates a Low state when all the plurality of twenty-first hit signals H21 are in a Low state. In other words, the twenty-third hit signal H23 indicates a Low state when all the plurality of anode analog signals generated by the plurality of anode electrodes 31 are less than or equal to the threshold. Such the twenty-third hit signal H23 is also referred to as anode hit signal.

When the second read circuit 130 includes a plurality of the cathode read circuits 132, the logic circuit 120 may include an OR circuit 122 as shown in Fig. 9. The twenty-second hit signal H22 from each of the cathode read circuits 132 is input to the OR circuit 121. The twenty-second hit signal H22, as in the case of the twenty-first hit signal H21, indicates a High state when at least one of the plurality of cathode analog signals input to the cathode read circuit 132 is in a High state. The OR circuit 122 processes the plurality of twenty-second hit signals H22 to output a twenty-fourth hit signal H24. The twenty-fourth hit signal H24 indicates a High state when at least one of the plurality of twenty-second hit signal H22 is in a High state. In other word, the twenty-fourth hit signal H24 indicates a High state when at least one of the plurality of cathode analog signals generated by the plurality of cathode electrodes 32 exceeds a threshold. The twenty-fourth hit signal H24 indicates a Low state when all the plurality of twenty-second hit signals H22 are in a Low state. In other words, the twenty-fourth hit signal H24 indicates a Low state when all the plurality of cathode analog signals generated by the plurality of cathode electrodes 32 are less than or equal to the threshold. Such the twenty-fourth hit signal H24 is also referred to as cathode hit signal.

When the second read circuit 130 includes the anode read circuit 131 and the cathode read circuit 132, the logic circuit 120 may include an AND circuit 123 as shown in Fig. 9. The twenty-third hit signal H23 and the twenty-fourth hit signal H24 are input to the AND circuit 123. The AND circuit 123 processes the twenty-third hit signal H23 and the twenty-fourth hit signal H24 to generate a second hit signal H20. The second hit signal H20 indicates a High state when at least one of the plurality of anode analog signals from the electron detector 30 exceeds a threshold and at least one of the plurality of cathode analog signals from the electron detector 30 exceeds a threshold. The second hit signal H20 indicates a Low state when all the plurality of anode analog signals are less than or equal to the threshold or all the plurality of cathode analog signals are less than or equal to the threshold.

As shown in Fig. 9, the logic circuit 120 may include a processing circuit 124 to which the second hit signal H20 is input. When the second hit signal H20 is input to the processing circuit 124, the processing circuit 124 generates the first trigger signal TS1. When the second hit signal H20 is input to the processing circuit 124, the processing circuit 124 may immediately generate the first trigger signal TS1. Alternatively, after a first delay time DT1 has elapsed from when the second hit signal H20 is input to the processing circuit 124, the processing circuit 124 may generate the first trigger signal TS1. The first delay time DT1 may be shorter than or equal to the maximum travel time TMAX.

After a second delay time DT2 has elapsed from when the second hit signal H20 is input to the processing circuit 124, the processing circuit 124 may generate the second trigger signal TS2. The second delay time DT2 may be shorter than or equal to the maximum travel time TMAX. This can suppress generation of the second trigger signal TS2 before an electron produced at a position far from the electron detector 30 reaches the electron detector 30.

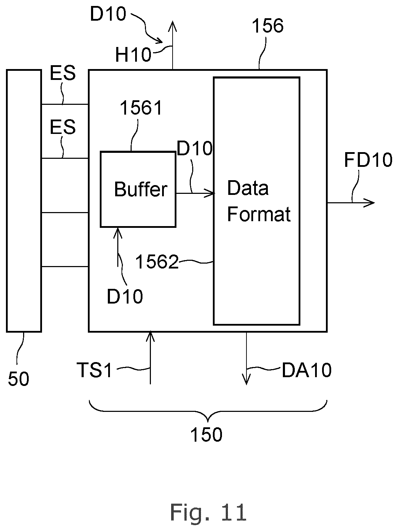

Next, the first read circuit 150 will be described in detail. Fig. 11 is a block diagram that shows an example of the configuration of the first read circuit 150. A plurality of analog signals ES generated by the plurality of detecting elements 51 of the radiation detector 50 are input to the first read circuit 150. The first read circuit 150 digitizes the plurality of analog signals ES to generate first data D10.

The first read circuit 150, as in the case of the anode read circuit 131, may include a plurality of amplifiers that amplify the plurality of analog signals ES. The first read circuit 150, as in the case of the anode read circuit 131, may include a plurality of comparators that binarize the plurality of analog signals ES to generate a plurality of hit signals. The first read circuit 150 may process the plurality of hit signals by using an OR circuit to generate a first hit signal H10. The first read circuit 150 may output the first hit signal H10 to the logic circuit 120. The first hit signal H10 is part of the first data D10. The first hit signal H10 indicates a High state when at least one of the plurality of analog signals generated by the plurality of detecting elements 51 exceeds a threshold. The first hit signal H10 indicates a Low state when all the plurality of analog signals generated by the plurality of detecting elements 51 are less than or equal to the threshold.

The first read circuit 150, as in the case of the anode read circuit 131, may include an AD converter. The AD converter may digitize an analog signal obtained by adding the plurality of analog signals ES. The data digitized by the AD converter may also be referred to as first intensity data.

The first read circuit 150 may include a first buffer 1561. The first buffer 1561 is, for example, a ring buffer. The first buffer 1561 stores the first data D10 in itself during a first storage period. The first storage period may be shorter than or equal to the maximum travel time TMAX. When the first trigger signal TS1 is generated after the first delay time DT1 has elapsed since the second hit signal H20 is input, the first storage period may be longer than the maximum travel time TMAX. The first storage period may be shorter than the sum of the first delay time DT1 and the maximum travel time TMAX.

When the first trigger signal TS1 is input to the first read circuit 150, the first data D10 stored in the first buffer 1561 at that time is output from the first buffer 1561. The first read circuit 150 may include a first data processing unit 1562 that processes the output first data D10. The first data processing unit 1562 generates first final data FD1 to be transmitted to the computer 110.

The first final data FD1 at least partially includes information of the first data D10. For example, the first final data FD10 may include information of the first hit signal H10. For example, the first final data FD10 may include the first intensity data. The format of the information of the first data D10 included in the first final data FD10 may be the same as or different from the format of the first data D10.

The first final data FD10 may include information about the time at which the first data D10 is stored in the first buffer 1561. The first final data FD10 may include information about the position of the detecting element 51 that has detected radiation. In other words, the first final data FD10 may include information about the position of arrival of radiation on the radiation detector 50.

The first buffer 1561, the first data processing unit 1562, and the like may be made up of an integrated circuit 156. The integrated circuit 156 is, for example, an FPGA.

The first read circuit 150 may output a data acquisition signal DA10 to the logic circuit 120. The data acquisition signal DA10 is a signal that enters a High state when writing of the first buffer 1561 is being performed.

Next, the logic circuit 120 will be described by referring back to Fig. 9. As shown in Fig. 9, a VETO signal VS may be input to the processing circuit 124. The VETO signal VS is a signal that enters a High state when writing of the buffer is being performed in the anode read circuit 131, the cathode read circuit 132, or the first read circuit 150. When the VETO signal VS is input to the processing circuit 124, the processing circuit 124 may stop outputting the trigger signals TS1, TS2. In other words, when the VETO signal VS enters a High state, the processing circuit 124 may set the trigger signals TS1, TS2 to a Low state. This can suppress input of a trigger signal to the anode read circuit 131, the cathode read circuit 132, and the first read circuit 150 while writing of the buffer is being performed.

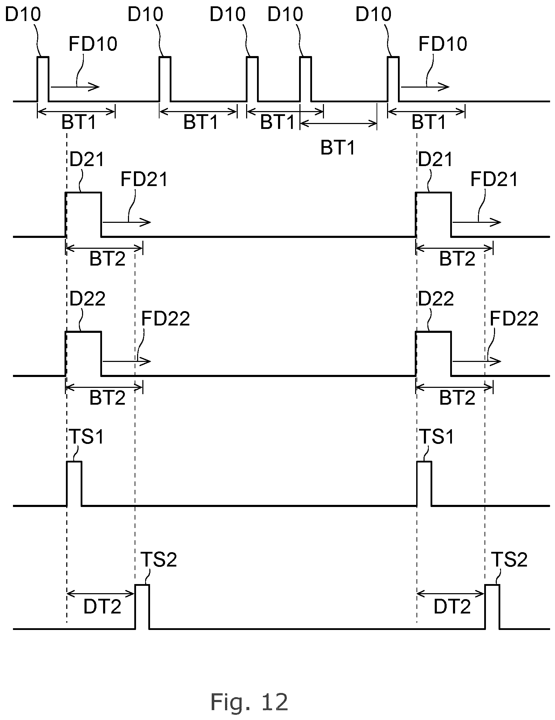

Next, an example of the operation of the detecting apparatus 10 will be described. Fig. 12 is a timing chart that shows an example of signal processing in the detecting apparatus 10.

When Compton scattering of radiation occurs inside the container 20, a recoil electron and an electron cloud R3 are produced. When scattered radiation R2 is detected by the radiation detector 50, the first read circuit 150 generates first data D10. Fig. 12 shows the first hit signal H10 of the first data D10. The first data D10 is stored in the first buffer during the first storage period BT1.

After the radiation R2 is detected by the radiation detector 50, electrons of the electron cloud R3 reach the electron detector 30. When the electrons are detected by the anode electrodes 31 and the cathode electrodes 32, twenty-first data D21 and twenty-second data D22 are generated. Fig. 12 shows the anode hit signal of the twenty-first data D21 and the cathode hit signal of the twenty-second data D22. The twenty-first data D21 and the twenty-second data D22 are stored in the second buffer during the second storage period BT2.

When both the anode hit signal and the cathode hit signal enter a High state, a second hit signal is generated. When the second hit signal is generated, a first trigger signal TS1 is generated. When the first trigger signal TS1 is input to the first read circuit 150, the first read circuit 150 transmits first final data FD10 including the first data D10 to the computer 110.

As shown in Fig. 12, after the second delay time DT2 has elapsed since generation of the second hit signal, a second trigger signal TS2 is generated. When the second trigger signal TS2 is input to the second read circuit 130, the second read circuit 130 transmits second final data FD20 including the second data D20 to the computer 110. The second final data FD20 includes twenty-first final data FD21 including the twenty-first data D21 and twenty-second final data FD22 including the twenty-second data D22.

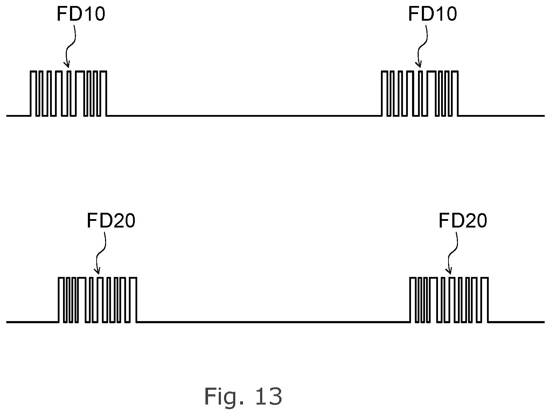

As for the first data D10 in the first position and the first data D10 in the fifth position from the left in Fig. 12, the first trigger signal TS1 is generated while the first data D10 is stored in the first buffer. Therefore, the first data D10 in the first position from the left and the first data D10 in the fifth position from the left are transmitted to the computer 110. Fig. 13 is a timing chart that shows an example of the first final data FD10 and the second final data FD20 to be transmitted to the computer 110.

On the other hand, as for the first data D10 in the second position to the first data D10 in the fourth position from the left in Fig. 12, the first trigger signal TS1 is not generated while the first data D10 is stored in the first buffer. This situation can occur when radiation not scattered inside the container 20 reaches the radiation detector 50. This situation can also occur when radiation that has not passed through the container 20 reaches the radiation detector 50. The first data D10 in the second position from the left to the first data D10 in the fourth position from the left are not transmitted to the computer 110 and are erased.

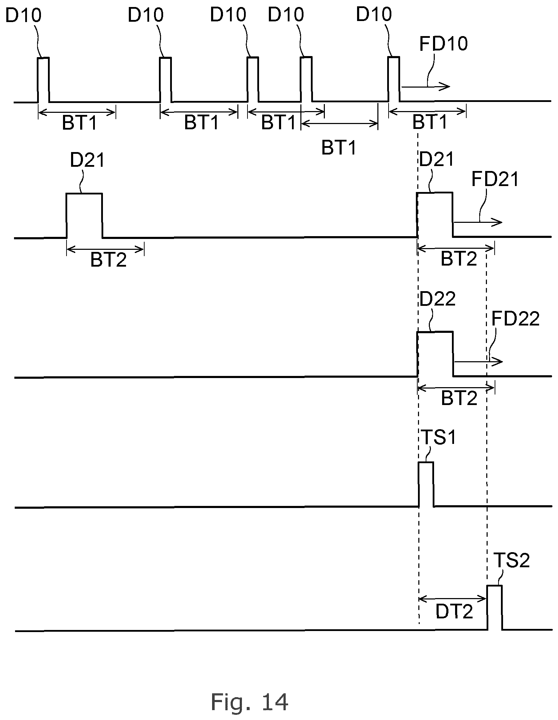

Fig. 14 is a timing chart that shows another example of signal processing. In the example shown in Fig. 14, the first data D10 in the first position from the left is accompanied by generation of the twenty-first data D21 and not accompanied by generation of the twenty-second data D22. Therefore, the first trigger signal TS1 is not generated while the first data D10 is stored in the first buffer. This situation can occur when the energy of electrons of the electron cloud R3 is low. When the energy of electrons is low, it is difficult to accurately calculate the track and the like of the recoil electron. Therefore, the usefulness of the first data D10 and the second data D20 in the case where the energy of electrons is low is low. The first data D10 in the first position from the left is not transmitted to the computer 110 and is erased.

The computer 110 calculates information about radiation and electrons based on the first final data FD10 and the second final data FD20. For example, the computer 110 may calculate the position of arrival of radiation R2, the energy of the radiation R2, the track of a recoil electron, the energy of the recoil electron, the position of the scattering point P, and the like. The computer 110 may calculate the direction of incidence of radiation that has entered the container 20 based on these pieces of information. The computer 110 may image the position of the radiation source of the radiation that has entered the container 20.

According to the present embodiment, the first data D10 regarding radiation that does not involve proper production of electrons inside the container 20 is not transmitted to the computer 110 and is erased. Therefore, the amount of first data D10 transmitted to the computer 110 can be reduced. Thus, the load on the computer 110 can be reduced. For example, the load used for calculation processing, image processing, and the like of first data D10 is reduced. For example, the load used for communication of first data D10 is reduced. Thus, the computer 110 can preferentially process useful data. Therefore, it is possible to calculate faster the direction of incidence of radiation that has entered the container 20 as compared to the existing computer 110. Therefore, when, for example, the detecting apparatus 10 detects radiation radiated from radioactive drugs inside a patient's body, the degree of patient exposure can be reduced.

Various changes may be applied to the above-described embodiment. Hereinafter, modifications will be described with reference to the attached drawings as needed. In the following description and the drawings used in the following description, like reference signs to the reference signs used for corresponding portions in the above-described embodiment are used for portions that can be similarly configured to those of the first embodiment, and the description thereof will not be repeated. Furthermore, if the operational effects obtained in the above-described embodiment are also apparent in the modifications, the description thereof may be omitted.

### (First Modification)

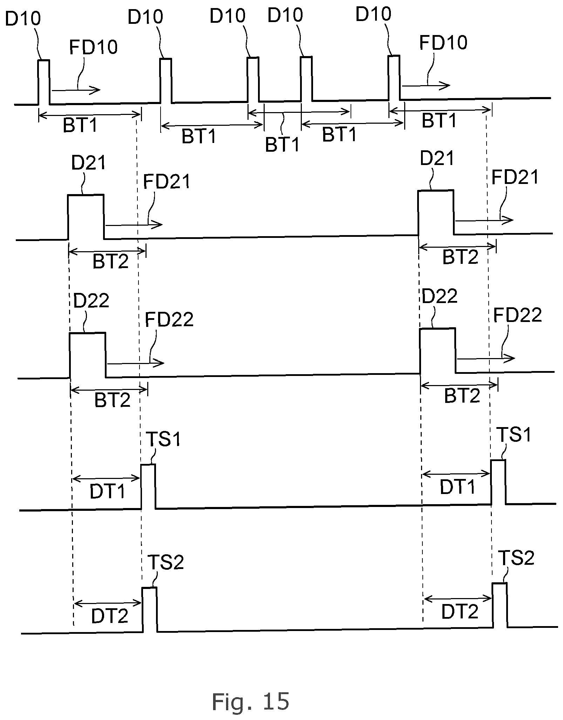

Fig. 15 is a timing chart that shows an example of signal processing in the first modification. As shown in Fig. 15, the first trigger signal TS1 and the second trigger signal TS2 may be generated simultaneously in response to the second hit signal. For example, the first delay time DT1 may be the same as the second delay time DT2.

In the example shown in Fig. 15 as well, when the first trigger signal TS1 is generated while the first data D10 is stored in the first buffer, the first final data FD10 is transmitted to the computer 110.

### (Second Modification)

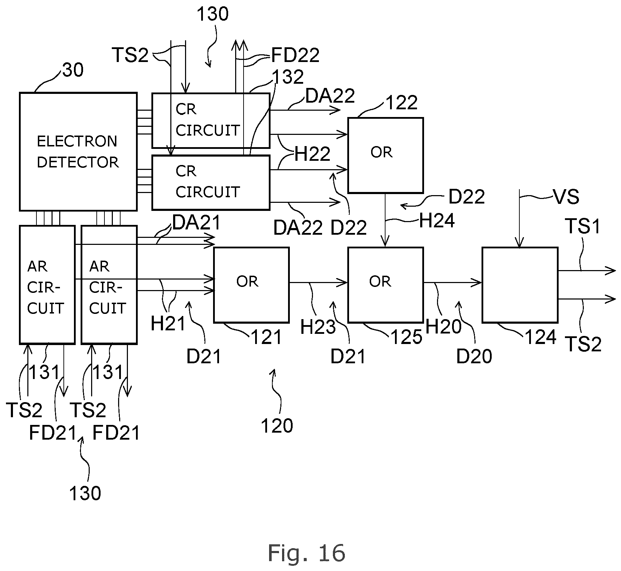

Fig. 16 is a block diagram that shows a second read circuit 130 and a logic circuit 120 in the second modification. As shown in Fig. 16, the anode hit signal H23 and the cathode hit signal H24 may be input to an OR circuit 125. The OR circuit 125 processes the twenty-third hit signal H23 and the twenty-fourth hit signal H24 to generate a second hit signal H20. The second hit signal H20 indicates a High state when at least one of the plurality of anode analog signals from the electron detector 30 exceeds a threshold or at least one of the plurality of cathode analog signals from the electron detector 30 exceeds a threshold. The second hit signal H20 indicates a Low state when all the plurality of anode analog signals are less than or equal to the threshold and all the plurality of cathode analog signals are less than or equal to the threshold. When the second hit signal H20 is input to the processing circuit 124, the processing circuit 124 generates the first trigger signal TS1.

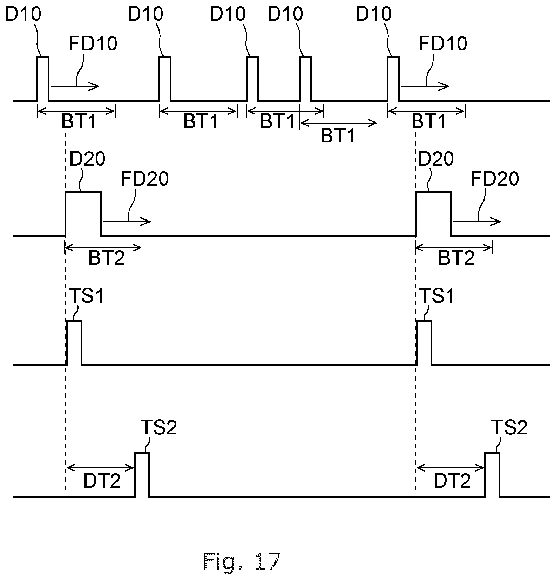

Fig. 17 is a timing chart that shows an example of signal processing in the second modification. When electrons are detected by the anode electrodes 31 or the cathode electrodes 32, second data D20 is generated. Fig. 17 shows a second hit signal of the second data D20.

When the second hit signal is generated, a first trigger signal TS1 is generated. When the first trigger signal TS1 is input to the first read circuit 150, the first read circuit 150 transmits first final data FD10 including the first data D10 to the computer 110.

After the second delay time DT2 has elapsed since generation of the second hit signal, a second trigger signal TS2 is generated. When the second trigger signal TS2 is input to the second read circuit 130, the second read circuit 130 transmits second final data FD20 including the second data D20 to the computer 110.

In this modification as well, the first data D10 regarding radiation that does not involve generation of electrons inside the container 20 is not transmitted to the computer 110 and is erased. Therefore, the amount of first data D10 transmitted to the computer 110 can be reduced. Thus, the load on the computer 110 can be reduced. For example, the load used for calculation processing, image processing, and the like of first data D10 is reduced.

### (Third Modification)

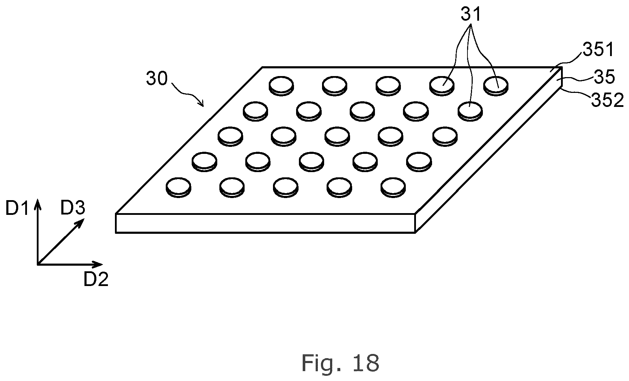

Fig. 18 is a perspective view that shows the electron detector 30 in the third modification. As shown in Fig. 18, the electron detector 30 includes a plurality of anode electrodes 31 arranged in the second direction D2 and the third direction D3. The electron detector 30 may include a single cathode electrode facing the plurality of anode electrodes 31.

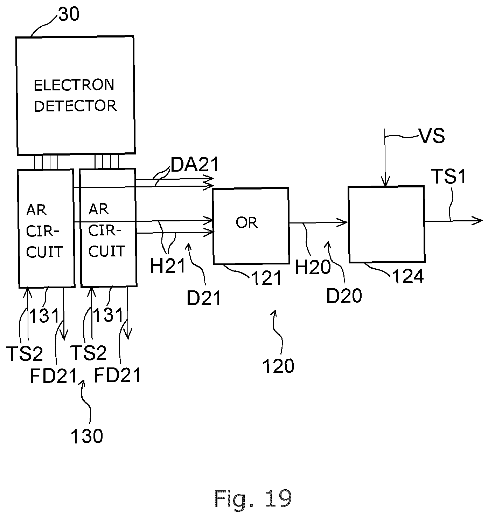

Fig. 19 is a block diagram that shows an example of the second read circuit 130 and the logic circuit 120 in the third modification. The second read circuit 130 includes anode read circuits 131 but does not include a cathode read circuit. In this case, the OR circuit 121 may generate a second hit signal H20. The second hit signal H20 indicates a High state when at least one of the plurality of anode analog signals from the electron detector 30 exceeds a threshold. The second hit signal H20 indicates a Low state when all the plurality of anode analog signals are less than or equal to the threshold.

An example of signal processing in the third modification is the same as an example of signal processing in the second modification shown in Fig. 17. In this modification as well, the first data D10 regarding radiation that does not involve generation of electrons inside the container 20 is not transmitted to the computer 110 and is erased. Therefore, the amount of first data D10 transmitted to the computer 110 can be reduced. Thus, the load on the computer 110 can be reduced. For example, the load used for calculation processing, image processing, and the like of first data D10 is reduced.

### (Fourth Modification)

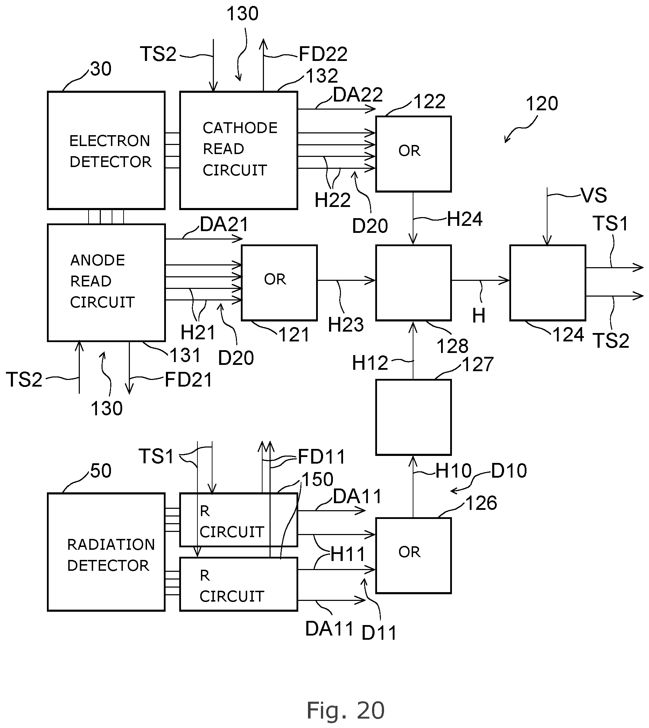

In this modification, both the first trigger signal TS1 and the second trigger signal TS2 are generated based on both the first hit signal and the second hit signal. Fig. 20 is a block diagram that shows a first read circuit 150, a second read circuit 130, and a logic circuit 120 in the fourth modification.

As shown in Fig. 20, the detecting apparatus 10 may include a plurality of the first read circuits 150. The number of first read circuits 150 is determined according to the number of detecting elements 51 of the radiation detector 50. For example, when the number of detecting elements 51 is 64 and the number of analog signals that can be processed by one first read circuit 150 is 32, the detecting apparatus 10 includes two first read circuits 150.

The first read circuit 150 may transmit eleventh final data FD11 to the computer 110 in response to input of the first trigger signal TS1. The eleventh final data FD11 is part of the first final data FD10. The eleventh final data FD11 may include an eleventh hit signal H11. The eleventh hit signal H11 indicates a High state when at least one of the plurality of analog signals input to the first read circuit 150 is in a High state.

As shown in Fig. 20, a plurality of the eleventh hit signals H11 may be input to the OR circuit 126. The OR circuit 126 outputs a first hit signal H10.

The logic circuit 120 may include a processing circuit 127 to which the first hit signal H10 is input. The processing circuit 127 outputs a retention signal H12. The retention signal H12 indicates a High state during a first retention period from when the first hit signal H10 is generated. The first retention period is a period for waiting for an electron produced at a position far from the electron detector 30 reaches the electron detector 30. The first retention period may be shorter than or equal to the maximum travel time TMAX.

The logic circuit 120 may include a processing circuit 128 to which the twenty-third hit signal H23, the twenty-fourth hit signal H24, and the retention signal H12 are input. The processing circuit 128 generates a second hit signal based on the twenty-third hit signal H23 and the twenty-fourth hit signal H24. For example, the processing circuit 128, as in the case of the AND circuit 123, may generate a second hit signal when both the anode hit signal H23 and the cathode hit signal H24 are in a High state. Alternatively, the processing circuit 128, as in the case of the OR circuit 125 according to the second modification, may generate a second hit signal when any one of the anode hit signal H23 and the cathode hit signal H24 is in a high state. The processing circuit 128 generates a hit signal H when the retention signal H12 is in a High state at the time when the second hit signal is generated.

With the combination of the processing circuit 127 with the processing circuit 128, when a second hit signal is generated within the first retention period since generation of the first hit signal H10, a hit signal H can be generated. The hit signal H is input to the processing circuit 124.

When the hit signal H is input to the processing circuit 124, the processing circuit 124 generates a first trigger signal TS1. When the hit signal H is input to the processing circuit 124, the processing circuit 124 may immediately generate the first trigger signal TS1. Alternatively, after a first delay time DT1 has elapsed from when the hit signal H is input to the processing circuit 124, the processing circuit 124 may generate the first trigger signal TS1. After a second delay time DT2 has elapsed since the hit signal H is input to the processing circuit 124, the processing circuit 124 may generate a second trigger signal TS2.

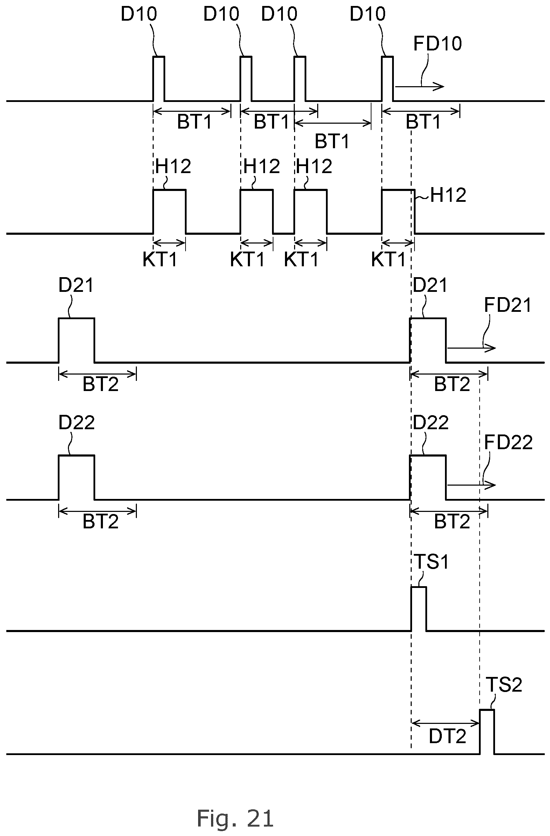

Fig. 21 is a timing chart that shows an example of signal processing in the fourth modification. When scattered radiation R2 is detected by the radiation detector 50, the first read circuit 150 generates first data D10. Fig. 21 shows the first hit signal H10 of the first data D10. The retention signal H12 indicates a High state during a first retention period KT1 since generation of the first hit signal H10.

When a second hit signal is generated during the first retention period KT1, a first trigger signal TS1 and a second trigger signal TS2 are generated. In the example shown in Fig. 21, as for the first data D10 in the fourth position from the left, twenty-first data D21 and twenty-second data D22 are generated to generate a second hit signal during the first retention period KT1. Therefore, the first data D10 in the fourth position from the left is transmitted to the computer 110. In addition, the twenty-first data D21 in the second position from the left and the twenty-second data D22 in the second position from the left, which are produced together with the first data D10 in the fourth position from the left, are also transmitted to the computer 110.

On the other hand, as for the twenty-first data D21 in the first position from the left and the twenty-second data D22 in the first position from the left, the corresponding first data D10 is not generated. Therefore, a second trigger signal TS2 is not generated. This situation can occur when electrons not caused by Compton scattering are detected by the electron detector 30. The twenty-first data D21 in the first position from the left and the twenty-second data D22 in the first position from the left are not transmitted to the computer 110 and are erased.

According to this modification, the second data D20, such as the twenty-first data D21 and the twenty-second data D22, related to electrons not caused by Compton scattering, are not transmitted to the computer 110 and are erased. Therefore, the amount of second data D20 transmitted to the computer 110 can be reduced. Thus, the load on the computer 110 can be reduced. For example, the load used for calculation processing, image processing, and the like of second data D20 is reduced. For example, the load used for communication of second data D20 is reduced. Thus, the computer 110 can preferentially process useful data. Therefore, it is possible to calculate faster the direction of incidence of radiation that has entered the container 20 as compared to the existing computer 110. Therefore, when, for example, the detecting apparatus 10 detects radiation radiated from radioactive drugs inside a patient's body, the degree of patient exposure can be reduced.

### (Fifth Modification)

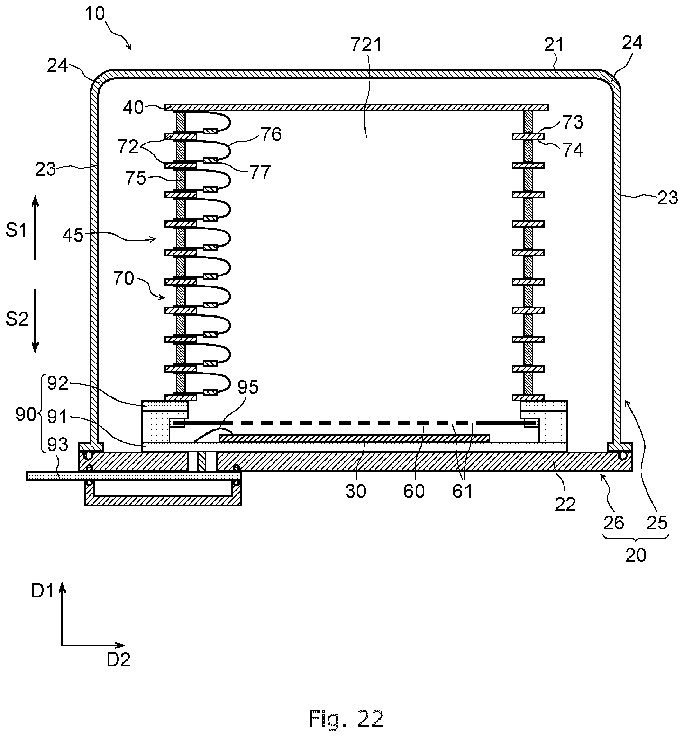

Fig. 22 is a sectional view that shows a detecting apparatus 10 in the fifth modification. The detecting apparatus 10 includes a container 20, and an electron detector 30 and a drift electrode 40 located inside the container 20. The detecting apparatus 10 does not need to include a radiation detector. At least helium-3 (³He) is contained in the container 20. Helium-3 is a stable isotope of a normal helium atom (⁴He). An atomic nucleus of helium-3 includes two protons and one neutron. In addition to helium-3, mixed gas of argon and ethane may be contained in the container 20.

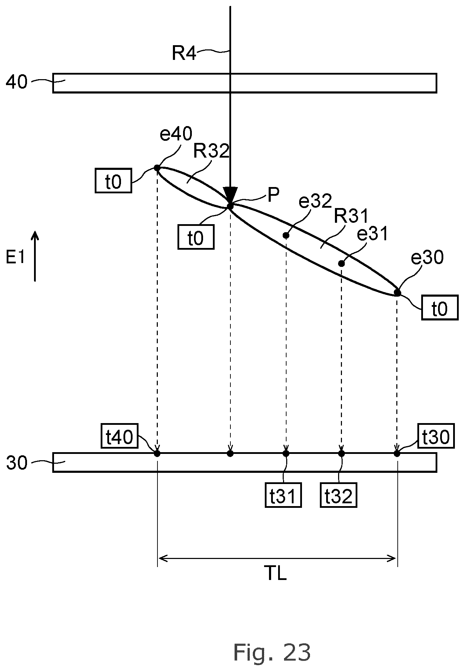

The detecting apparatus 10 is expected to detect a neutron that enters the inside of the container 20 through the first part 21. When a neutron that have entered the side of the container 20 is absorbed by helium-3, a proton and tritium (³H) are produced. Fig. 23 is a diagram that shows a state where a neutron enters the inside of the container 20. The reference sign R4 represents, for example, a neutron generated by an accelerator and incoming from a point at infinity. The detecting apparatus 10 is disposed such that the face of the first part 21 of the container 20 is orthogonal to the direction of incidence of the neutron R4. The reference sign P represents a position where the neutron is absorbed by helium-3. The position P is also referred to as absorption point.

The proton and tritium produced at the absorption point P fly in opposite directions from each other. Electron clouds made up of electrons that occur as a result of ionization of argon are formed in the tracks of a proton and tritium. The reference sign R31 represents an electron cloud formed in the track of a proton, and the reference sign R32 represents an electron cloud formed in the track of tritium. The reference sign e30 represents an electron located at the end point of the electron cloud R31, and the reference sign e40 represents an electron located at the end point of the electron cloud R32. The reference sign e31 and the reference sign e32 represent electrons in the electron cloud R31 located between the absorption point P and e30.

In Fig. 23, the reference sign TL represents the sum of the length of the electron cloud R31 and the length of the electron cloud R32 in the surface direction of the electron detector 30. The mass of a proton is 1/3 of the mass of tritium. Therefore, the length of the electron cloud R31 is three times the length of the electron cloud R32. The position of the absorption point P projected on the surface of the electron detector 30 is calculated as a position displaced by 1/TL in the length direction from the position of the electron e40 projected on the surface of the electron detector 30. The length direction is a direction from the position of the electron e40 projected on the surface of the electron detector 30 toward the position of the electron e30 projected on the surface of the electron detector 30.

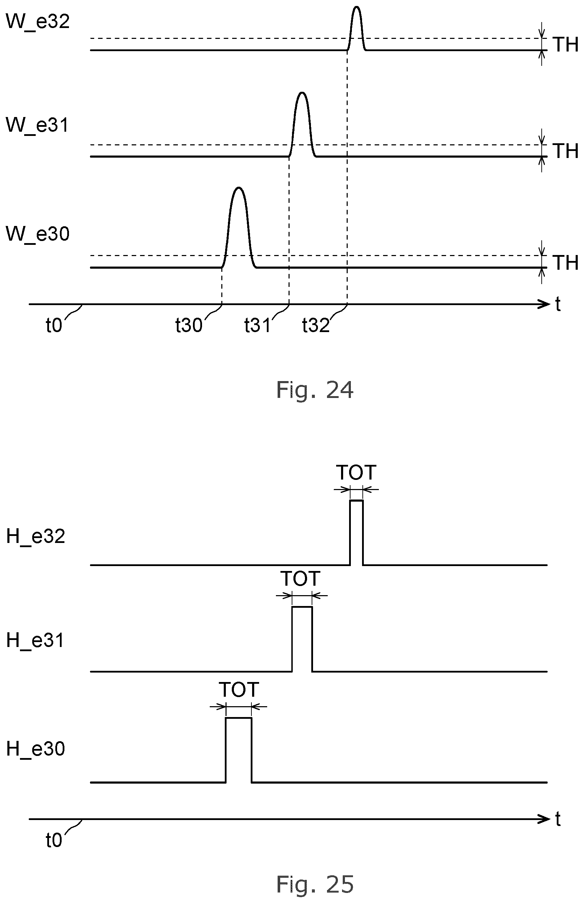

Each of the plurality of electrodes of the electron detector 30 generates an analog signal when detecting an electron. Fig. 24 is a timing chart that shows an example of analog signals W_e30, W_e31, and W_e32. The analog signal W_e30 is generated by an electrode that has detected the electron e30 in the electron cloud R31. The analog signal W_e31 is generated by an electrode that has detected the electron e31 in the electron cloud R31. The analog signal W_e32 is generated by an electrode that has detected the electron e32 in the electron cloud R31.

The distance from the electron e30 to the electron detector 30 is shorter than the distance from the electron e31 to the electron detector 30. The distance from the electron e31 to the electron detector 30 is shorter than the distance from the electron e32 to the electron detector 30. Therefore, as shown in Fig. 24, the peak of an analog signal generated by detecting an electron appears in order of the analog signal W_e30, the analog signal W_e31, and the analog signal W_e32.

In the electron cloud R31 of the proton, the peak of the analog signal increases as the position approaches the end point. Therefore, the peak of the analog signal W_e30 due to the electron e30 is larger than the peak of the analog signal W_e31 due to the electron e31. Furthermore, the peak of the analog signal W_e31 due to the electron e31 is larger than the peak of the analog signal W_e32 due to the electron e32.

As described above, the second read circuit 130 digitizes each of analog signals generated by the electrodes of the electron detector 30. The second read circuit 130 generates a hit signal that indicates a High state when the intensity of an analog signal exceeds a threshold. In Fig. 24, the reference sign TH represents a threshold.

As the peak of an analog signal increases, a period during which the intensity of the analog signal exceeds a threshold extends. Therefore, as the peak of the analog signal increases, a period during which a hit signal is being generated, that is, a period of a High state extends. The period of a High state in a hit signal is also referred to as TOT (time over threshold). Fig. 25 is a timing chart that shows hit signals H_e30, H_e31, and H_e32 generated from the analog signals W_e30, W_e31, and W_e32.

In the electron cloud R31 of the proton, the peak of the analog signal increases as the position moves away from the absorption point P, with the result that the TOT extends. Therefore, based on the difference in position on the electron detector 30 of the TOT of a hit signal, as shown in Fig. 25, it is possible to identify the electron e30 located at the end point of the electron cloud R31.

In the electron cloud R32 of the tritium, the peak of the analog signal reduces as the position moves away from the absorption point P, in contrast to the case of the electron cloud R31 of the proton. Therefore, regarding the electron cloud R32 of tritium as well, it is possible to identify the electron e40 located at the end point of the electron cloud R32 based on the difference in position on the electron detector 30 of the TOT of the hit signal, as shown in Fig. 25.

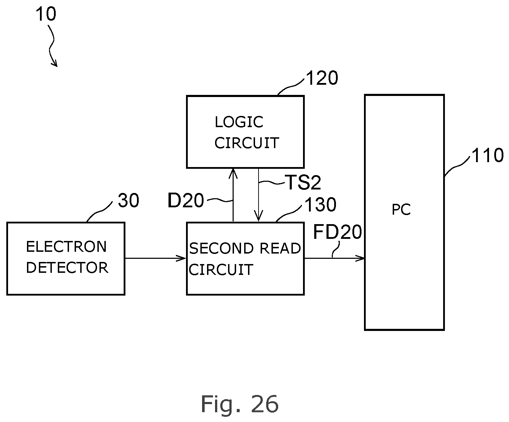

Fig. 26 is a block diagram that shows an example of a circuit for digitizing an analog signal of the electron detector 30 to generate data. The detecting apparatus 10 includes at least the second read circuit 130. The second read circuit 130 can communicate with a computer 110. The detecting apparatus 10 may include a logic circuit 120 connected to the second read circuit 130.

As shown in Fig. 5, when the electron detector 30 includes a plurality of anode electrodes 31 and a plurality of cathode electrodes 32, the second read circuit 130 generates a plurality of twenty-first hit signals H21 and a plurality of twenty-second hit signals H22.

The second final data FD20 transmitted from the second read circuit 130 to the computer 110 may include a plurality of twenty-first hit signals H21 and a plurality of twenty-second hit signals H22. In this case, the computer 110 may calculate a plurality of pieces of anode TOT information and a plurality of pieces of cathode TOT information based on the plurality of twenty-first hit signals H21 and the plurality of twenty-second hit signals H22. The plurality of anode TOTs is information about TOTs of the plurality of twenty-first hit signals H21. The plurality of cathode TOTs is information about TOTs of the plurality of twenty-second hit signals H22. The computer 110 may identify the electron e30 located at the end point of the electron cloud R31 and the electron e40 located at the end point of the electron cloud R32 based on the plurality of pieces of anode TOT information and the plurality of pieces of cathode TOT information. The computer 110 may image the position of incidence of the neutron R4 into the detecting apparatus 10 based on the position of the electron e30 and the position of the electron e40. In this way, the combination of the detecting apparatus 10 with the computer 110 can function as a neutron imaging apparatus that images a neutron.

The twenty-first hit signal H21 may include information about the rise and fall of the anode analog signal. In other words, in the twenty-first hit signal H21, the rise and fall of the anode analog signal may be differentiated. Rise means the timing when the anode analog signal exceeds a threshold, and fall means the timing when the anode analog signal falls below the threshold. Similarly, the twenty-second hit signal H22 may include information about the rise and fall of the cathode analog signal. In other words, in the twenty-second hit signal H22, the rise and fall of the cathode analog signal may be differentiated. By using information on the rise and fall, the computer 110 can further accurately calculate a plurality of pieces of anode TOT information and a plurality of pieces of cathode TOT information.

The plurality of pieces of anode TOT information and the plurality of pieces of cathode TOT information may be calculated not in the computer 110 but in the second read circuit 130. In other words, the second read circuit 130 may calculate a plurality of pieces of anode TOT information and a plurality of pieces of cathode TOT information based on a plurality of the twenty-first hit signals H21 and a plurality of the twenty-second hit signals H22. In this case, the second final data FD20 may include a plurality of pieces of anode TOT information and a plurality of pieces of cathode TOT information. The computer 110 may image the position of incidence of the neutron R4 to the detecting apparatus 10 based on the plurality of pieces of anode TOT information and the plurality of pieces of cathode TOT information.

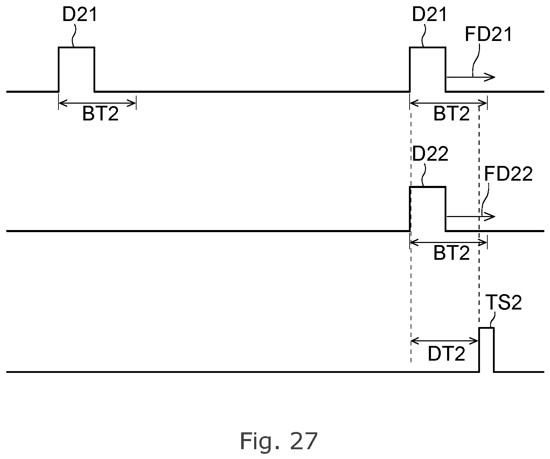

Fig. 27 is a timing chart that shows an example of signal processing in the detecting apparatus 10.

When the neutron R4 is absorbed by helium-3, the electron cloud R31 of the proton and the electron cloud R32 of the tritium are formed. When the electrons in the electron clouds R31, R32 are detected by the anode electrodes 31 and the cathode electrodes 32 of the electron detector 30, twenty-first data D21 and twenty-second data D22 are generated. Fig. 27 shows the anode hit signal of the twenty-first data D21 and the cathode hit signal of the twenty-second data D22. The twenty-first data D21 and the twenty-second data D22 are stored in the second buffer during the second storage period BT2.

When both the anode hit signal and the cathode hit signal enter a High state, a second hit signal is generated. After the second delay time DT2 has elapsed since generation of the second hit signal, a second trigger signal TS2 is generated. When the second trigger signal TS2 is input to the second read circuit 130, the second read circuit 130 transmits second final data FD20 including the second data D20 to the computer 110. The second final data FD20 includes twenty-first final data FD21 including the twenty-first data D21 and twenty-second final data FD22 including the twenty-second data D22.

In Fig. 27, the twenty-first data D21 in the first position from the left is not accompanied by generation of the twenty-second data D22. Therefore, the second trigger signal TS2 is not generated while the twenty-first data D21 is stored in the second buffer. The twenty-first data D21 in the first position from the left is not transmitted to the computer 110 and is erased. This situation can occur when the energy of electrons of the electron clouds R31, R32 is low.

In this modification as well, the second data regarding a neutron that does not involve proper production of electrons inside the container 20 is not transmitted to the computer 110 and is erased. Therefore, the amount of second data transmitted to computer 110 can be reduced. Thus, the load on the computer 110 can be reduced. For example, the load used for calculation processing, image processing, and the like of second data is reduced. For example, the load used for communication of second data is reduced. Thus, the computer 110 can preferentially process useful data. Therefore, for example, it is possible to calculate faster the position of incidence of a neutron that has entered the container 20 as compared to the existing computer 110.

### (Sixth Modification)

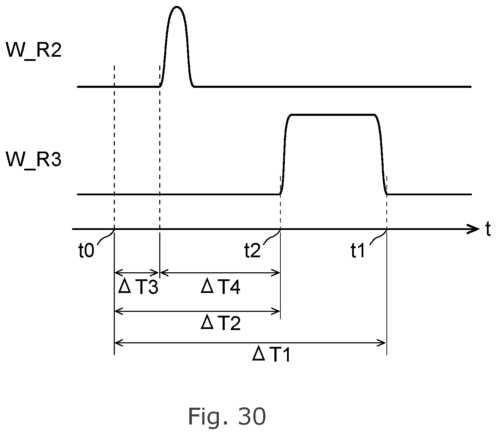

In the above embodiment, as shown in Fig. 7, a calculation method on the assumption that the analog signal of the radiation detector 50 is generated at time t0 has been described. In this modification, an example in which an analog signal of the radiation detector 50 is generated after a lapse of a time ΔT3 from time t0, as shown in Fig. 30, will be described. The time ΔT3 may be a difference between the time at which the first hit signal H10 rises and time t0. The first hit signal H10 is obtained by digitizing the analog signal of the radiation detector 50. The time ΔT3 is also referred to as a detection delay time.

ΔT4 in Fig. 30 represents a time from when radiation is detected by the radiation detector 50 to when electrons are detected by the electron detector 30. The time ΔT4 may be a difference between the time at which the first hit signal H10 rises and the time at which the second hit signal H20 rises.

The time ΔT2 is calculated by adding the time ΔT3 to the time ΔT4. The time ΔT2 is equivalent to a time taken for the electron e2 to travel from the end point of the electron cloud R3 to the electron detector 30. The time ΔT1 is also calculated in consideration of the time ΔT3. The time ΔT1 is equivalent to a time taken for the electron e1 to travel from the start point of the electron cloud R3 to the electron detector 30. The computer 110 may identify the position of the electron cloud in consideration of the time ΔT2 and the time ΔT1. For example, the computer 110 may identify the coordinates of electrons e1 and e2 in the first direction D1 in consideration of the time ΔT2 and the time ΔT1. For example, the computer 110 may image the electron cloud in consideration of the time ΔT2 and the time ΔT1.

The time ΔT3 occurs depending on the radiation detector 50. For example, the time ΔT3 in the radiation detector 50 including a semiconductor detecting element can be longer than the time ΔT3 in the radiation detector 50 including a scintillator.

The computer 110 may acquire information about the time ΔT3 from the radiation detector 50. For example, the radiation detector 50 may transmit, to the computer 110, a signal digitized from information including the time ΔT3. The computer 110 may calculate information about the time ΔT3 based on an analog signal of the radiation detector 50.

When the radiation detector 50 includes a semiconductor detecting element, there can be some relationship between the time ΔT3 and the intensity of the analog signal. A semiconductor detecting element includes a cathode electrode and an anode electrode. After the radiation R2 passes through the cathode electrode, an electron is produced at a position between the cathode electrode and the anode electrode. When the energy of the radiation R2 is small, an electron is produced at a position far from the anode electrode. In this case, the travel distance of the electron to reach the anode electrode is long, so the time ΔT3 is long. In addition, since the energy of the radiation R2 is small, the intensity of the analog signal is also low. On the other hand, when the energy of the radiation R2 is large, an electron is produced at a position close to the anode electrode. In this case, the travel distance of the electron to reach the anode electrode is short, so the time ΔT3 is short. In addition, since the energy of the radiation R2 is large, the intensity of the analog signal is also high. The time ΔT3 can be calculated based on the intensity of the analog signal.

### (Seventh Modification)

In the above embodiment, an example in which a first trigger signal TS1 is generated originally from a signal from the electron detector 30 has been described. For example, in Figs. 12, 14, 17, and 21, an example in which a first trigger signal TS1 is generated when a second hit signal is generated has been described. For example, in Fig. 15, an example in which a first trigger signal TS1 is generated after a first delay time DT1 has elapsed since generation of a second hit signal has been described. In this modification, an example in which a first trigger signal TS1 is generated originally from a signal from the radiation detector 50 will be described.

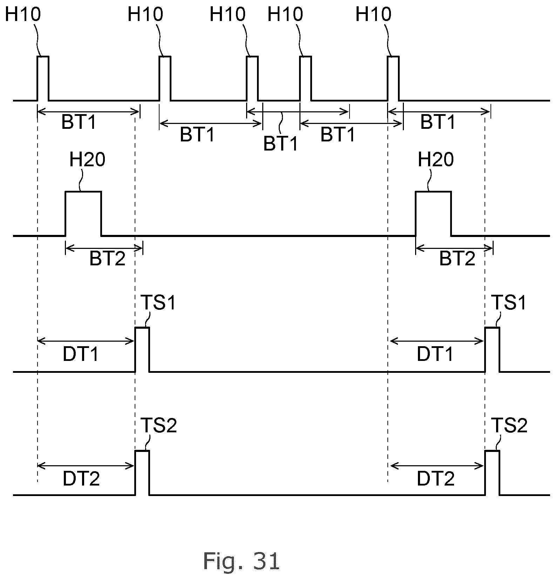

Fig. 31 is a timing chart that shows signal processing in the seventh modification. A first trigger signal TS1 may be generated after a first delay time DT1 has elapsed since generation of a first hit signal H10 of first data.

The first delay time DT1 may be the same as the maximum travel time TMAX. The first delay time DT1 may be substantially the same as the maximum travel time TMAX. The phrase "substantially the same" means that the first delay time DT1 is 0.90 times or longer and 1.00 time or shorter of the maximum travel time TMAX. The first delay time DT1 may be 0.45 times or longer and 1.00 time or shorter of the maximum travel time TMAX.

A first trigger signal TS1 may be generated only after a first delay time DT1 has elapsed since generation of a first hit signal H10 and when it is determined that a second hit signal H20 has been generated during the first delay time DT1. In other words, when a second hit signal H20 is not generated during the first delay time DT1, a first trigger signal TS1 does not need to be generated after the first delay time DT1 has elapsed since generation of a first hit signal H10.

As shown in Fig. 31, a second trigger signal TS2 may also be generated after a first delay time DT1 has elapsed since generation of a first hit signal H10. A second trigger signal TS2 may be generated only after a first delay time DT1 has elapsed since generation of a first hit signal H10 and when it is determined that a second hit signal H20 has been generated during the first delay time DT1. In other words, when a second hit signal H20 is not generated during the first delay time DT1, a second trigger signal TS2 does not need to be generated after the first delay time DT1 has elapsed since generation of a first hit signal H10.

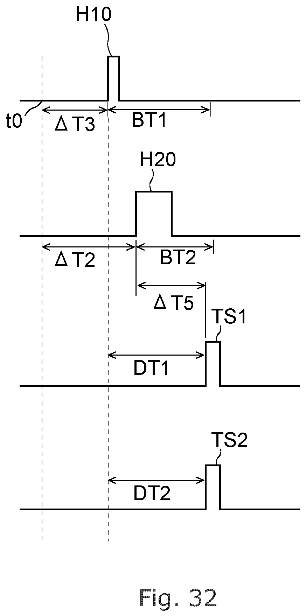

Fig. 32 is a timing chart that shows an example of a calculation method for the time ΔT2. After a first trigger signal TS1 is generated, a time ΔT5 is calculated. The time ΔT5 is a difference between the time at which a second hit signal H20 rises and the time at which the first trigger signal TS1 rises. A time ΔT2 is calculated by subtracting the time ΔT5 from the sum of a time ΔT3 and the first delay time DT1.

### (Supplemental Remarks)

As described in the embodiments and various modifications, the phrase "generating a hit signal" may mean "setting a hit signal to a High state". Similarly, the phrase "generating a trigger signal" may mean "setting a trigger signal to a High state". When the circuit of the detecting apparatus 10 performs some operation upon reception of a signal in a Low state, the phrase "generating a signal for generating a hit signal" may mean "setting a hit signal to a Low state". Similarly, the phase "generating a signal for generating a trigger signal" may mean "setting a trigger signal to a Low state".

Some modifications to the above-described embodiments have been described; of course, it is also possible to apply a plurality of modifications in combination as needed to the above-described embodiments.

### Reference Signs List

5 object
10 detecting apparatus
20 container
30 electron detector
31 anode electrode
32 cathode electrode
35 base
351 first face
352 second face
40 drift electrode
45 drift cage
50 radiation detector
51 detecting element
52 circuit board
60 electronic amplifier
70 auxiliary drift electrode
110 computer
120 logic circuit
130 second read circuit
131 anode read circuit
132 cathode read circuit
136 first integrated circuit
137 AD converter
138 second integrated circuit
1381 twenty-first buffer
1382 twenty-second buffer
1383 second data processing unit
150 first read circuit
156 integrated circuit
1561 first buffer
1562 first data processing unit

## Claims

1. A detecting apparatus that detects an electron, the detecting apparatus comprising:
a container containing gas;
an electron detector located inside the container, the electron detector detecting an electron of an electron cloud formed inside the container to generate an analog signal;
a drift electrode facing the electron detector; and
a second read circuit digitizing the analog signal generated by the electron detector to generate second data, wherein
the second read circuit includes a second buffer in which the second data is stored, and
the second read circuit transmits second final data including the second data stored in the second buffer to an external computer in response to a second trigger signal.

2. The detecting apparatus according to claim 1, wherein
the detecting apparatus comprises a logic circuit connected to the second read circuit,
the second read circuit generates a second hit signal when an intensity of the analog signal of the electron detector exceeds a threshold, and
the logic circuit generates the second trigger signal after a second delay time has elapsed since generation of the second hit signal in the electron detector.

3. The detecting apparatus according to claim 1, wherein
the detecting apparatus comprises a logic circuit connected to the second read circuit,
the electron detector includes a plurality of anode electrodes and a plurality of cathode electrodes,
the analog signal of the electron detector includes anode analog signals generated by the plurality of anode electrodes and cathode analog signals generated by the plurality of cathode electrodes,
the second read circuit generates an anode hit signal when an intensity of the anode analog signal exceeds a threshold and generates a cathode hit signal when an intensity of the cathode analog signal exceeds a threshold, and
the logic circuit generates the second trigger signal in response to generation of both the anode hit signal and the cathode hit signal.

4. The detecting apparatus according to claim 3, wherein
the detecting apparatus comprises a logic circuit connected to the second read circuit, and
the logic circuit generates the second trigger signal after a second delay time has elapsed since generation of both the anode hit signal and the cathode hit signal.

5. The detecting apparatus according to claim 2 or 4, wherein
the second delay time is shorter than or equal to a maximum travel time, and
the maximum travel time is a time taken for an electron to travel from the drift electrode to the electron detector.

6. The detecting apparatus according to claim 2 or 4, wherein
the second buffer of the second read circuit stores the second data during a second storage period,
the second storage period is longer than or equal to the second delay time.

7. The detecting apparatus according to any one of claims 1 to 4, wherein the second final data includes information about an intensity of the analog signal generated by the electron detector.

8. The detecting apparatus according to claim 7, wherein the second read circuit acquires information about the intensity of the analog signal generated by the electron detector at a sampling frequency of lower than or equal to 50 MHz.

9. The detecting apparatus according to claim 7, wherein the second read circuit acquires information about the intensity of the analog signal generated by the electron detector at a sampling frequency of higher than or equal to 10 MHz and lower than or equal to 20 MHz.

10. The detecting apparatus according to any one of claims 1 to 4, wherein the second final data includes information about time when the second data is stored in the second buffer.

11. The detecting apparatus according to any one of claims 1 to 4, wherein the second final data includes information about a position of arrival of an electron on the electron detector.

12. The detecting apparatus according to any one of claims 1 to 4, wherein
the electron cloud is formed in a track of a recoil electron produced by Compton scattering, and
the detecting apparatus comprises a radiation detector detecting radiation scattered by the Compton scattering to generate an analog signal, and a first read circuit digitizing the analog signal generated by the radiation detector to generate first data and transmitting first final data including the first data to an external computer.

13. The detecting apparatus according to any one of claims 1 to 4, wherein the electron cloud is formed in tracks of tritium and a proton produced by a nuclear reaction of a neutron.

14. The detecting apparatus according to claim 13, wherein
the electron detector includes a plurality of anode electrodes and a plurality of cathode electrodes,
the analog signal of the electron detector includes a plurality of anode analog signals generated by the plurality of anode electrodes and a plurality of cathode analog signals generated by the plurality of cathode electrodes,
the second read circuit generates an anode hit signal with a differentiation between rise and fall of a signal when an intensity of the anode analog signal exceeds a threshold, and generates a cathode hit signal with a differentiation between rise and fall of a signal when an intensity of the cathode analog signal exceeds a threshold, and
the second final data includes a plurality of the anode hit signals corresponding to the plurality of anode electrodes, and a plurality of the cathode hit signals corresponding to the plurality of cathode electrodes.

15. The detecting apparatus according to claim 13, wherein
the electron detector includes a plurality of anode electrodes and a plurality of cathode electrodes,
the analog signal of the electron detector includes a plurality of anode analog signals generated by the plurality of anode electrodes and a plurality of cathode analog signals generated by the plurality of cathode electrodes,
the second read circuit generates an anode hit signal when an intensity of the anode analog signal exceeds a threshold, and generates a cathode hit signal when an intensity of the cathode analog signal exceeds a threshold,
the second final data includes a plurality of pieces of anode TOT information related to the plurality of anode electrodes and a plurality of pieces of cathode TOT information related to the plurality of cathode electrodes,
each piece of the anode TOT information is information about a period in which a corresponding one of the anode hit signals is generated, and
each piece of the cathode TOT information is information about a period in which a corresponding one of the cathode hit signals is generated.

16. A radiation identification apparatus comprising:
the detecting apparatus according to claim 12; and
a computer receiving the first final data and the second final data, transmitted from the detecting apparatus, wherein
the computer calculates a direction of incidence of radiation to the detecting apparatus based on the first final data and the second final data.

17. A radiation identification apparatus comprising:
the detecting apparatus according to claim 12; and
a computer receiving the first final data and the second final data, transmitted from the detecting apparatus, wherein
the computer images a position of a radiation source based on the first final data and the second final data, the radiation source radiating radiation.

18. A neutron imaging apparatus comprising:
the detecting apparatus according to claim 14; and
a computer receiving the second final data transmitted from the detecting apparatus, wherein
the computer images a position of incidence of a neutron to the detecting apparatus based on the second final data.

19. A neutron imaging apparatus comprising:
the detecting apparatus according to claim 15; and
a computer receiving the second final data transmitted from the detecting apparatus, wherein
the computer images a position of incidence of a neutron to the detecting apparatus based on the second final data.
